# EUROPEAN PATENT SPECIFICATION

(11) **EP 4 304 845 B1**
(45) Date of publication and mention of the grant of the patent: **07.05.2025**
(21) Application number: 22715318.6
(22) Date of filing: 11.03.2022
(51) Int. Cl.: B30B 15/16

(54) **HYDRAULIC OR OLEODYNAMIC OR PNEUMATIC PRESS**
HYDRAULISCHE ODER OLEODYNAMISCHE ODER PNEUMATISCHE PRESSE
PRESSE HYDRAULIQUE OU OLÉODYNAMIQUE OU PNEUMATIQUE

(30) Priority: 11.03.2021 IT 202100005816
(43) Date of publication of application: 17.01.2024
(73) Proprietor: Muraro S.r.l., 35129 Padova (IT)
(72) Inventor: SARTORI, Angelo, 35129 Padova (IT)
(74) Representative: Feltrinelli, Secondo Andrea
(86) International application number: PCT/IB2022/052210
(87) International publication number: WO 2022/190057

(56) References cited:
- EP-A1- 0 116 024
- WO-A1-89/11969
- DE-A1- 3 017 406
- JP-A- H0 988 906
- JP-A- H08 118 086
- JP-A- H08 174 097
- JP-A- S60 154 900
- US-A- 2 273 315
- US-A- 2 614 539
- US-A- 5 526 738
- US-A- 5 556 266

## Description

### TECHNICAL FIELD OF INVENTION

This invention concerns a hydraulic or oleodynamic or pneumatic press equipped with a specific drive group for the operation or displacement of a pressing component of the press, if desired to forge objects or pieces or to mould sheets or other products.

### STATE OF THE PRIOR ART

Oleodynamic presses are usually equipped with pumps, usually with variable flow, for the movement of respective pressing plates, which pumps are driven by their respective electric motors, usually very large, because the pumps are approximately 350 kW or higher.

Each motor is attached directly to a respective pump and when the press is to be operated, the pump is switched in working condition, possibly by varying a special control plate.

However, particularly in the press sector, the working sequence provides for waiting periods alternating with short pressing periods and only during the latter the press acts actively and progressively according to the required force.

This results in graphs of the power absorption of the pumps from the motors that have peaks at the pressing periods, but in the other periods, i.e. in the waiting periods, the pumps are in a resting condition, during which, even if the pumps or a respective shaft is rotated by the motor, it acts at actually zero flow rate, which clearly determines a high inefficiency of the system, because large motors must be used although for most of the working sequence and more specifically during waiting periods no power is required from the system.

Moreover, in the event that electricity is lacking, as long as the power supply is not restored, it is not possible, unless a UPS or uninterruptible power supply is used, to extract the pieces from the pressing area of the press.

In addition, given the high temperatures, this can often lead to the onset of fires.

US 5 556 266 A discloses a press according to the preamble of claim 1.

### OBJECTS OF THE INVENTION

One object of the present invention is therefore to provide a new hydraulic or oleodynamic or pneumatic press.

Another object of the present invention is to provide a press as mentioned above that makes it possible to employ small electric motors while ensuring any necessary power peaks.

Another object of the present invention is to provide a press as indicated above that ensures economical and effective operation.

Another object of the present invention is to provide a press equipped with systems such as to guarantee the extraction of objects or pieces from the press even in the absence or shortage of power supply.

In accordance with one aspect of the invention, a press is provided according to claim 1.

Dependent claims refer to preferred and advantageous embodiments of the invention.

### BRIEF DESCRIPTION OF THE DRAWINGS

Other features and advantages of the invention will be more evident from the description of an embodiment of a press, illustrated as an indication in the attached drawings in which:

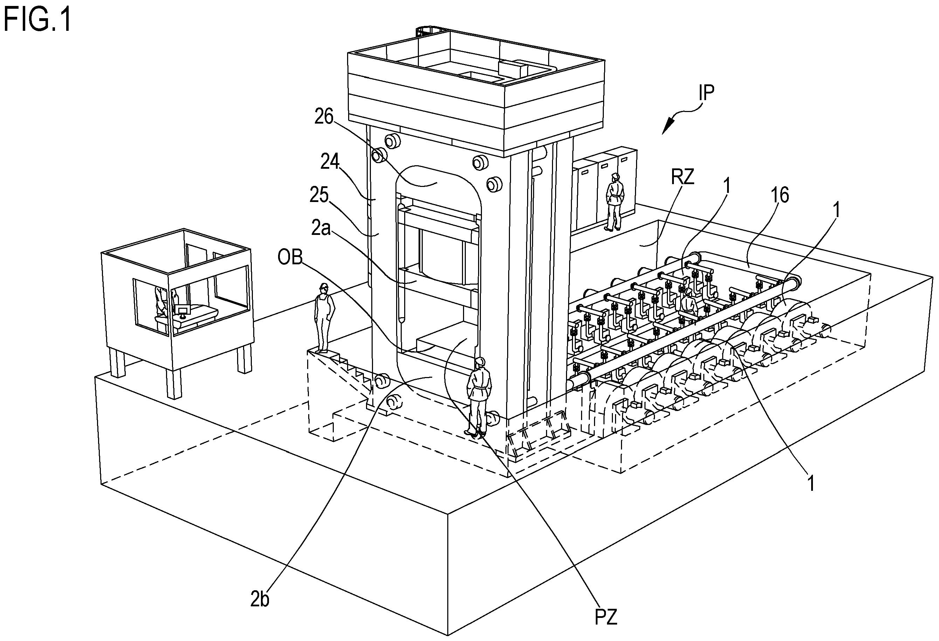

- figure 1 is a perspective view slightly from the top of a press according to the present invention;

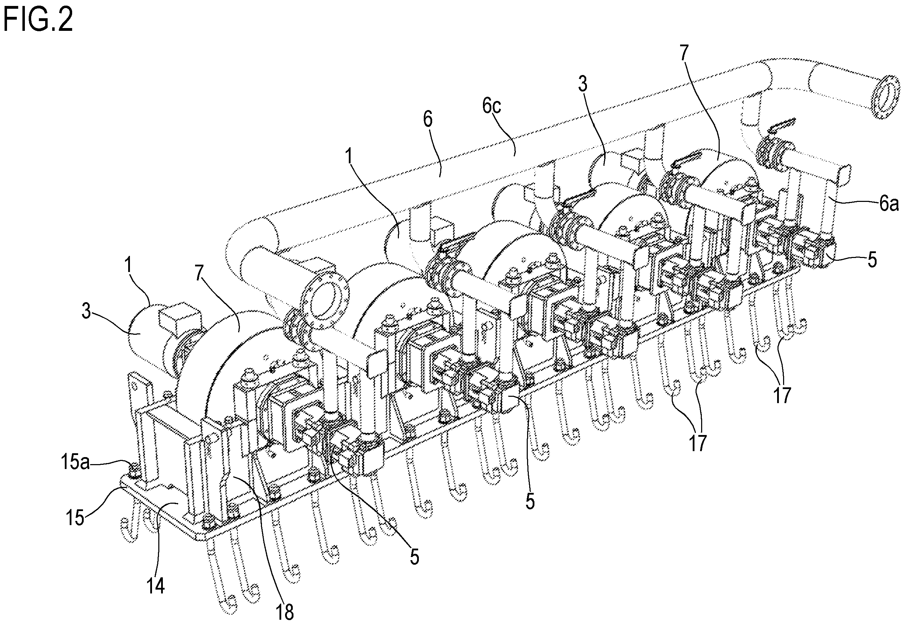

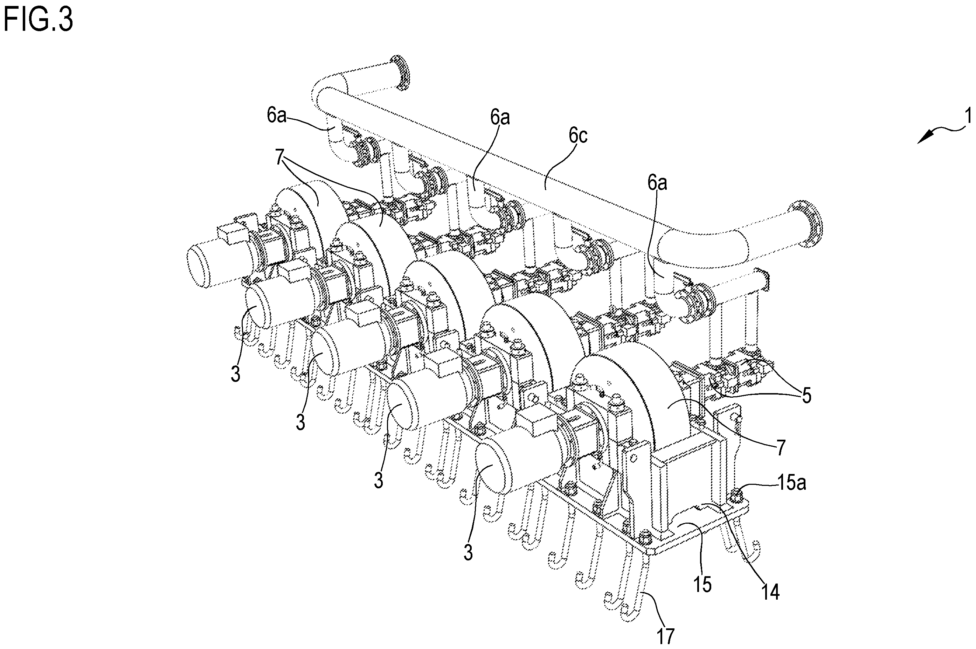

- figures 2 and 3 are perspective views from above and from respective sides of feeding units for a press according to this invention;

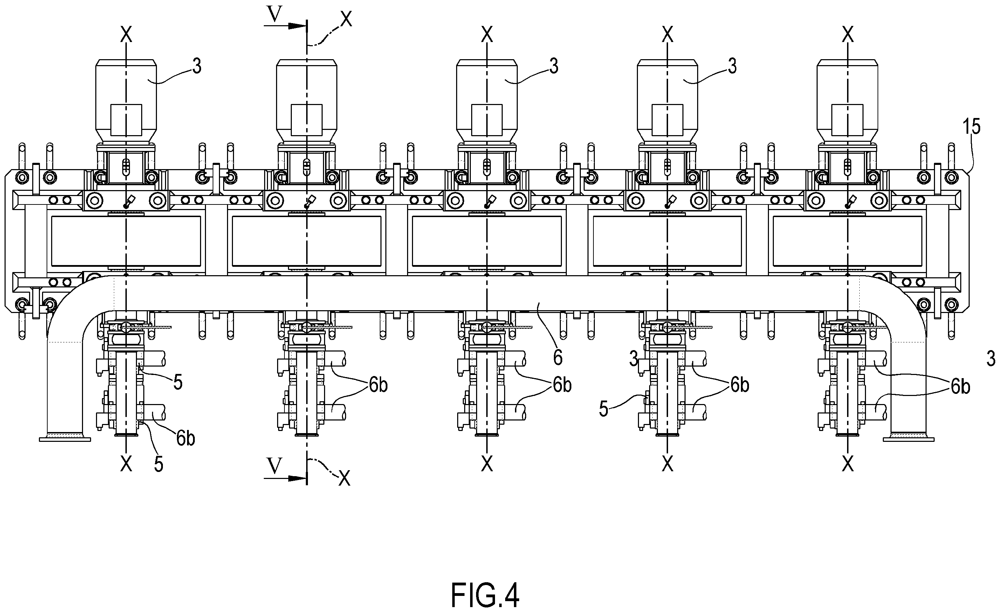

- figure 4 is a top view of figure 2 groups;

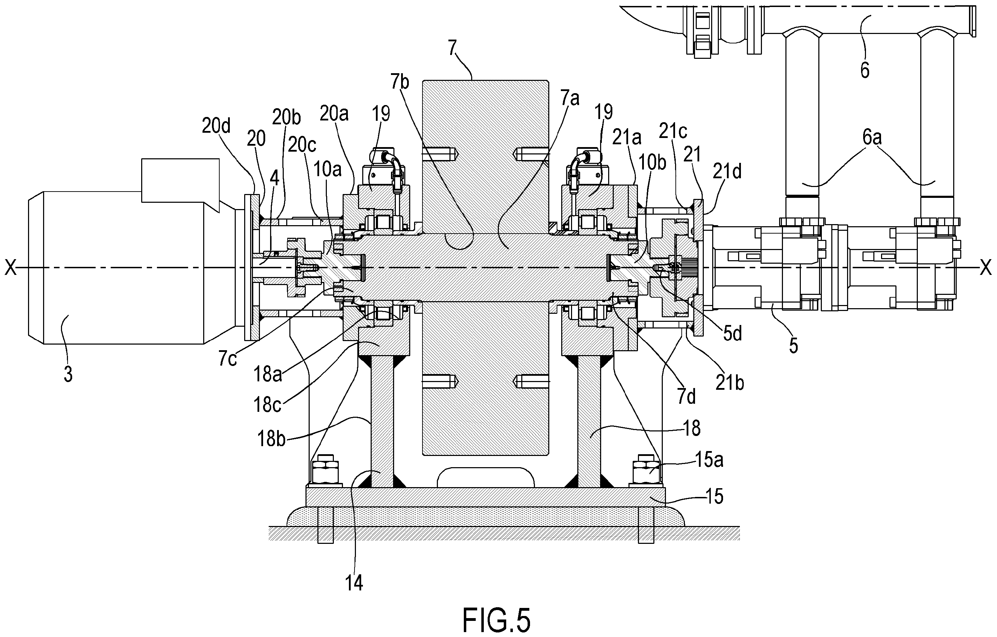

- figure 5 is a view taken along the line V-V of figure 4;
- figure 6 is a sectional view of a variable flow pump for a press according to this invention with schematic indication of a respective switching and control component,
- figure 7 is a perspective view with sectional parts of the pump in figure 6;
- figure 8 is an illustrative schematic view of a press structure according to the present invention with simple effect actuators and delivery inversion pump;
- figure 9 is a schematic view of another press structure in accordance with the present invention similar to figure 8 but with a double-acting actuator;
- figures 10 and 11 are views to be similar, respectively, to figures 8 and 9 of another embodiment in accordance with the present invention; and
- figures 12 and 13 are views to be similar, respectively, to figures 8 and 9 of another embodiment in accordance with the present invention.

In the attached drawings equal parts or components are distinguished by the same reference numbers.

### EMDOBIMENTS OF THE INVENTION

With reference to the attached figures, a hydraulic or oleodynamic or pneumatic press IP equipped with one or more drive groups 1 of a pressing component 2a of the press is illustrated.

Press 1 is then also equipped with a base 2b or top component defining with the pressing component 2a a pressing area or area PZ where pieces or objects OB to be machined can be arranged.

Preferably, the hydraulic or oleodynamic or pneumatic press IP is for forging parts or for moulding sheets or other products.

As regards the or each drive group 1, it shall comprise at least one motor 3, preferably electric, which is arranged to rotate, preferably in a substantially continuous manner, a respective main shaft 4. In particular, the group 1 is for the operation of the pressing component 2a to move it in accordance with the respective work cycles.

As for the expression "in a substantially continuous manner", with the same it is meant that motor 3 is not continuously switched off and on, but the same is kept switched on during several cycles of operation of a pressing component 2a.

More specifically, motor 3 is switched on and kept on during several successive pressings, for example two, three, four or even more, and is not switched off after each pressing to switch it back on at the next pressing step.

Motor 3 can be for example a motor of not high power, for example between 10 and 100 kW, if desired between 25 and 45 kW or better between 36 and 38 kW. Clearly, motor 3 could also have power greater than 100 kW.

Group 1 then includes at least one pump 5 or compressor designed to suck and discharge a liquid, such as water or oil, or a gas for moving a pressing component 2a.

**In** this description reference will be made in some places to a pump and the liquid conveyed by it, but it will be understood that the same description applies to the case where a drive unit includes a compressor conveying a gas.

The group 1 further includes a circuit 6 for conveying the liquid or gas in suction, crossing and delivery from the pump 5 or compressor, which circuit 6 is arranged to suitably convey the liquid or gas for pushing or in any case moving the pressing component 2a.

As regards in detail the embodiment with a pump 5, it may be a variable flow pump with cylinder and piston units 5a, 5b and a drive plate 5c responsible for engaging and handling a component of each cylinder and piston unit 5a, 5b when plate 5c or unit 5a, 5b is placed in rotation.

More specifically, pump 5 can be a variable flow pump with axial units cylinder and piston 5a, 5b, i.e. it includes a second shaft 5d rotatable around a second axis y-y and is integral in rotation with the cylinder and piston units 5a, 5b or with the plate 5c, with cylinder and piston units 5a, 5b mounted around a portion of that shaft 5d with pistons 5b sliding along axes parallel to the second axis y-y of the second shaft 5d.

A shoe component 5e can also slide on the plate 5c joined, if desired by means of spherical joints to the cylinders 5a or to the pistons 5b.

The plate 5c is a plate, for example, annular in which the second shaft 5d is inserted and which is hinged with a respective hinge pin (not shown in figures) to a moving or fixed part of the pump or a carter of the same, which part may or may not be integral in rotation with the second shaft 5d. More specifically, the plate 5c is pivoted around a third axis orthogonal to the second axis y-y so as to be angularly movable between at least a second position in which it has a main extension plane orthogonal to the second axis and a plurality of first inclined positions, in which the plate 5c has the main extension plane that defines an angle Θ greater or less than 0 and greater or lesser than the second position (which could also be at Θ = 0).

Thanks to this expedient, by moving the plate 5c around the respective hinge pin it is possible to vary the stroke of the pistons 5b and thus the flow rate of the pump when the rotation of the second 5d shaft is controlled, which determines a rotation of the plate 5c and not of the cylinder or piston units 5a, 5b or of the cylinder units 5a and piston 5b and not of the plate 5c (which in this case would be hinged on a fixed part of the pump).

Clearly, when the plate 5c is in the second position (for example Θ = 0) the pump is actually with very low or zero flow rate, since by rotating the second shaft 5d, the pistons 5b remain substantially in the same axial position or do not flow along the respective axis parallel to the second axis, while with the plate 5c in a first position (Θ ≠ 0), by controlling the rotation of the second shaft 5d, the pistons 5b make a greater stroke the greater the angle Θ and consequently the flow rate is different from 0 to a greater or lesser extent depending on the entity (greater or lesser) of that angle.

As will be understood, such a variable flow pump would also include a distribution plate 9 of the liquid or gas, which plate 9 can include, for example, through channels 9a in fluid communication on the one hand with the output of the cylinder and piston units 5a, 5b and on the other with at least one pump delivery that constitutes a supply section of the conveying circuit 6 to the pressing component 2a to be moved. The distribution plate 9 is preferably fixed or not integral in rotation with the second shaft 5d, if the latter is integral in rotation with the cylinder and piston units 5a, 5b, while it is mounted rotatable around the second axis or integral in rotation with the second shaft 5d, if the latter is not integral in rotation with the cylinder and piston units 5a, 5b.

Of course, a variable flow pump 5 for a group 1 could also be structured differently and the above provided description is only by way of example.

According to a less preferred variant, the pump 5 is with fixed flow rate.

In addition, the group 1 shall be equipped with at least one switching component 8a for switching between at least a first operating condition and at least one second operating condition of the pump 5 or compressor and/or a discharge or by-pass (not shown in figures) of conveying circuit 6, preferably but not necessarily downstream of pump 5 or compressor. The by-pass is a branch section of the conveying circuit that does not lead or flow into the pressing component 2a or a pressure multiplier upstream of the pressing component 2a, so that the liquid or gas fed in the by-pass does not contribute to the displacement of the latter.

If desired, but not necessarily, at least one control component 8b of the switching component 8a is also provided to switch it between the at least one first operating condition and at least one second operating condition.

If the pump 5 or compressor is with variable flow rate, in the first operating condition, the pump 5 or compressor could operate at a first delivery flow rate of the liquid or gas, while in the second operating condition the pump or compressor could operate at a second delivery flow rate lower than the first flow rate or at a second flow rate equal to zero.

In that case, the first flow rate would be able to properly move or displace a pressing component 2a, while the second flow rate would not be able to perform that task or would in any case perform it differently from the first.

According to this variant, if the pump 5 is made as indicated above, the switching component 8a could be responsible for angularly moving the plate 5c to move the pump from the at least one first (Θ ≠ 0) to the at least one second (for example Θ = 0) operating condition or vice versa.

Of course, the switching component 8a can be such as to place the 5c plate in any of the positions with Θ ≠ 0 or only in some specific positions.

According to this variant, the switching component 8a can be or include an actuator or similar, if desired electrical, oleodynamic, hydraulic arranged to angularly move by a desired entity the plate 5c around its hinge pin.

A control component 8b can thus be provided, if desired electronic, mechanical or electro-mechanical arranged to control the switching component 8a. Of course, according to a less preferred variant, instead of an electronic control component could also be provided a different control component, if desired manual that makes it possible to act on a mechanical element.

Preferably, the control component 8b can be a constant power regulator, which is such as to ensure that the power delivered by pump 5 is always the same.

In this regard, the power delivered by a pump is given by the pressure of the fluid delivered for the flow rate.

In a press as according to the present invention, the pressure of the liquid fed by pump 5 is in fact determined by the pressing step, as during a non-processing or pressing phase, the pressure is almost zero, while during pressing the pressure is greater than zero.

A constant power regulator 8b would ensure that as the pressure required for the liquid conveyed by the pump for the execution of the various pressing steps increased, the pump flow rate was reduced by reducing the angle Θ and vice versa.

Thanks to this expedient, it would be ensured that regardless of the power potentially available to the pump, the flow rate of the latter is varied according to the real needs during the work cycles of the press.

Depending on this, when the pressure demand is lower, there would be a greater flow rate and vice versa.

Of course, another type of regulator could also be envisaged, for example at constant pressure, at constant flow rate or otherwise.

In the case of a regulator with constant power, pressure or flow rate, there would therefore be not only a switching between the first and second operating conditions, but also a specific and appropriately variable control of the operation of the pump or compressor in the first operating condition.

Moreover, the group or press can also be equipped with special sensors (not shown in figures) arranged to detect the angular displacement of the plate 5c.

In addition to or as an alternative to what is now indicated, an exhaust or by-pass of the conveying circuit 6 may be provided, so that in the first operating condition, the exhaust or by-pass is closed or less open than in the second operating condition, so that pump 5 or compressor can deliver or convey the liquid or gas to the pressing component 2a to be operated, moving it, while in the second operating condition, the exhaust or by-pass is open or partially open so it is not possible to deliver the liquid or gas from pump 5 or compressor to the pressing component 2a to be operated or in any case it is not possible to do so with a flow rate satisfactory to move the pressing component 2a.

In this regard, when the exhaust or by-pass of the conveying circuit is closed or partially closed, the flow rate of gas or liquid conveyed through the conveying circuit 6 to the pressing component 2a is able to displace or move this component 2a appropriately, while when in the second condition the exhaust or by-pass is opened or in any case this element is opened to a extent greater than the first condition, the flow rate of gas or liquid conveyed through the conveying circuit 6 to the pressing component 2a is zero or in any case would not be able to perform this task depending on the sizing of the various components.

According to such a variant, the pump or compressor may also be with fixed flow rate.

In addition to or as an alternative to the above, the switching component may include a motion interception component from motor 3 to pump 5, such as a clutch or similar component suitably operated by means of a control component, if desired including an actuator and/or an electronic component or a manual control component.

It will be understood that the group 1 or in any case the press preferably even includes a valve or a group of valves responsible for controlling and properly adjusting the supply of liquid or gas between the pump or pumps 5 and the pressing component 2a.

In this respect, the liquid or gas conveying circuit 6 may, for example, include at least one suction duct 6a extending between the pump 5 or compressor and at least one cylinder of an actuator or system 11a, 11b, 11c with one or more hydraulic or oleodynamic or pneumatic cylinders 11a1, 11b1, 11c1 and pistons 11a2, 11b2, 11c2 of the press.

Alternatively or in addition to what has been now indicated, the suction duct 6a can extend between pump 5 and a special tank or container.

The liquid or gas conveying circuit 6 then comprises at least one delivery duct 6b extending between the pump 5 or compressor and a cylinder of an actuator or system 11a, 11b with one or more hydraulic or oleodynamic or hydraulic or pneumatic cylinders and pistons of the press.

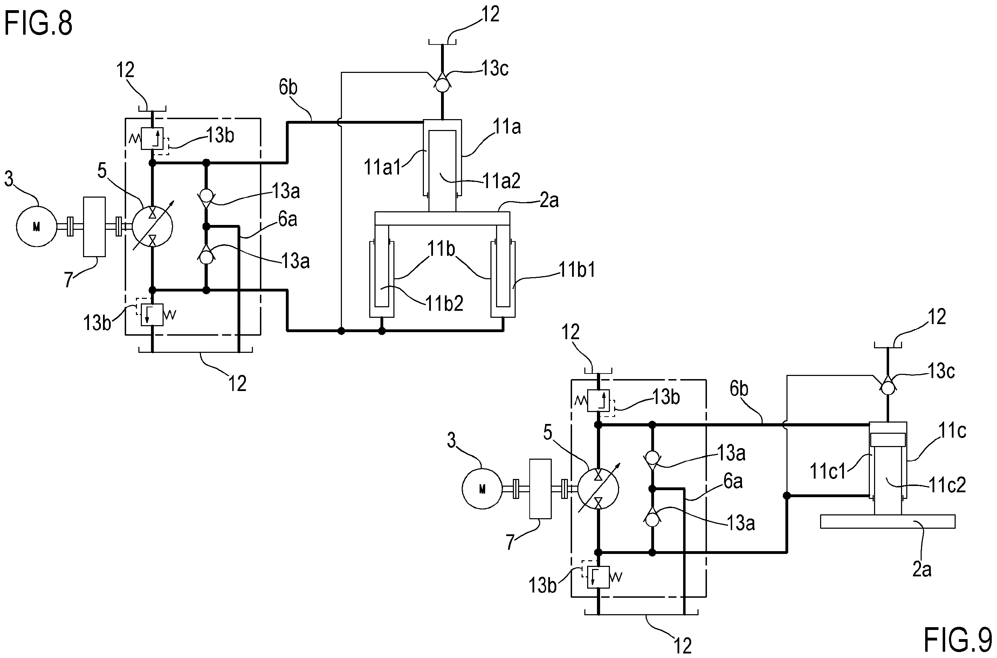

In essence, therefore, depending on whether the actuator or system with hydraulic or oleodynamic or hydraulic or pneumatic cylinders and pistons of the press is simple (see figures 8, 10 and 12) or double (see figures 9, 11 and 13) acting, the pump or compressor is arrange to
draw the liquid or gas from at least one first cylinder of an actuator and send it into at least one second cylinder of another actuator and/or into an auxiliary tank, in accordance with a simple-acting scheme, or
draw the liquid or gas from at least one part of a cylinder of an actuator during a duty cycle and send it to at least one other part of the cylinder of the actuator and/or auxiliary tank during a second duty cycle, in accordance with a double-acting operating scheme.

Clearly, the pump could suck in or send part of the liquid or gas from/into an auxiliary tank 12, particularly in a thrust condition as the thrust surfaces of the liquid or gas are usually different during the various working steps.

Of course, different operating schemes could also be envisaged in accordance with the provisions of the field.

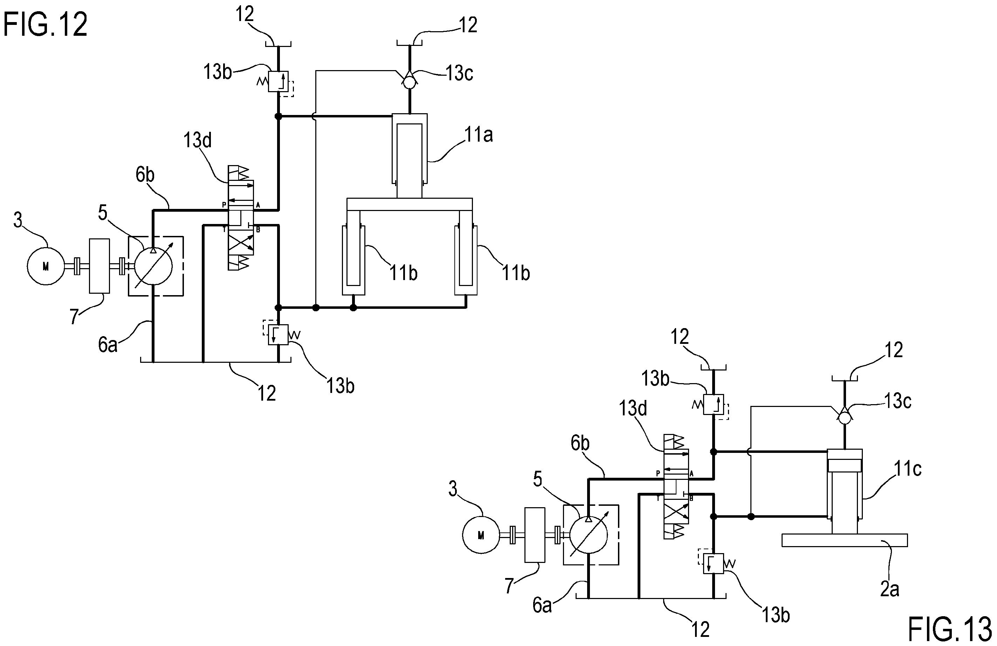

It should also be noted that pump 5 could be a reversible or reverse delivery pump (see figures 8-11) or a pump with a single delivery direction (see figures 12 and 13).

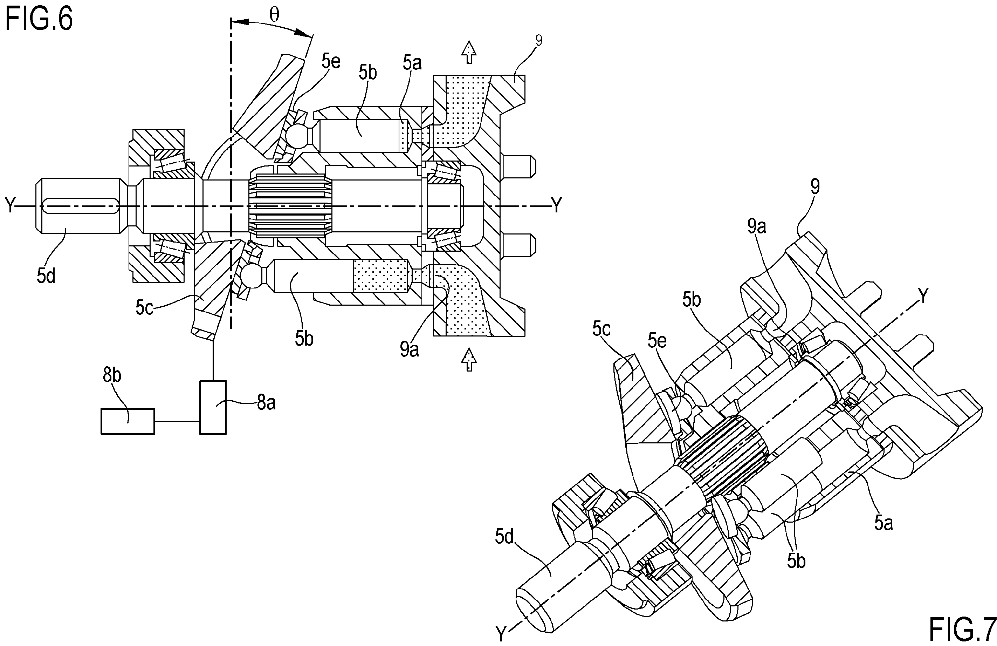

As for the case with reversible or reverse delivery pump, as will be understood, moving the plate 5c so as to vary the angle Θ from positive to negative or in any case starting from Θ = 0 in one direction or in the opposite direction, this is to say with reference to figures 6 and 7 before with upper, in figures, portion closer to the distribution plate 9 than the lower, in figures, portion and therefore with the lower portion closer to the distribution plate 9 than the upper portion, the operation of pump 5 is reversed, so that the suction mouth of the pump becomes delivery and vice versa or in any case the pump delivery is changed or reversed, while the suction can also remain the same.

Clearly, the reverse delivery would allow first to approach pressing component 2a and base component 2b and then, after reversing the operation of the pump, to move them away.

Of course, the power applied during the closing of the press and therefore during the approach of the pressing component 2a to the base component 2b could be the same as the opening step of the press and thus during the removal of the pressing component 2a from the base component 2b. Alternatively, one could have power applied during the opening step of the press less than the closing phase of the same.

Therefore, with a pump made as shown in figures 6 and 7, the angle Θ during the closing of the press could have the opposite direction but the same entity at the angle Θ during the opening of the press, or it could even be greater than the latter.

**In** this regard, the presence of the valve group ensures that once the angle Θ is reversed, it is possible to operate correctly in suction and delivery.

Such a group of valves preferably includes in this case check or unidirectional valves, which in fact open and close automatically depending on the direction of conveyance of the liquid or gas in the circuit.

Clearly, when one or more reverse delivery pumps are used, the suction duct during an operating cycle can become a delivery duct in a subsequent operating cycle in which the operation of the pump has been reversed and vice versa. In this case, it is therefore not possible to uniquely identify a suction and delivery duct.

Alternatively, always when one or more delivery inversion pumps are used, the suction duct is always the same during each operating cycle, while the pump directs the fluid alternately first in a first delivery circuit and then in a second delivery circuit.

In this case, the reverse delivery pump would have at least three outlets, one suction mouth and two delivery mouths.

It will also be understood that if a reverse delivery pump is used, there would be at least a first operating condition with pump delivery from a first side and suction from a second side and with pump delivery from the second or from a third side and suction from the first or second side, while at least one second operating condition may be unique.

In this case, then the angle Θ would be greater or less than 0 (therefore with a first delivery and with delivery inverted compared to the first) in the first operating condition, while in the second operating condition it would be 0 or in any case with a value small or lower than the first operating condition.

In addition, the group 1 includes at least one flywheel 7 interposed, at least functionally but also preferably structurally, between motor 3 and pump 5 or compressor, which flywheel 7 is kinematically connected on one side, to the main shaft 4, so that flywheel 7 is dragged in rotation by the latter, in particular in a substantially continuous manner or in any case is dragged by the engine 3 as long as engine 3 is driven. Of course, a decoupling component, such as a clutch, could also be envisaged between engine 3 and flywheel 7 to be operated when necessary or desired.

On the other hand, the flywheel 7 or a respective shaft 7a is kinematically connected to pump 5 or compressor or rather to a respective second shaft 5d or rotation component of the pump 5 or compressor to transfer thereto or the rotary motion imparted by the motor 3, in such a way that
the pump or compressor moves or pushes the liquid or gas in the conveying circuit 6 and up to a respective portion of engagement of a pressing component 2a so as to move or displace it, as a result of the motion imparted thereto by the flywheel 7 only in the first operating condition or to a greater extent or with greater power in the first operating condition,
while in the second operating condition, the pump 5 or the compressor does not move or push or rather is not able to move or push the liquid or gas in the conveying circuit 6 up to or so as to operate a pressing component 2a, or moves or pushes it to a lesser extent or with a lower flow rate or with less power with regard to the first operating condition so that it is not able to move or displace the pressing component 2a.

To better clarify the above reasoning, in the first operating condition the pump 5 or compressor is kinematically connected to the flywheel 7 and receives motion from it and also the conveyance circuit 6 of the liquid or gas between pump or compressor and pressing component 2a is not obstructed, closed or a respective by-pass section or discharge is not opened, so that the rotation of the flywheel 7 determines a corresponding rotation of a second shaft 5d or rotation component of the pump 5 and a defined flow rate of liquid or gas in the conveying circuit until it reaches or so as to operate the pressing component 2a and move it or displace it appropriately.

In the second operating condition, on the other hand, the pump 5 or compressor is kinematically disconnected from the flywheel 7 and does not receive motion from it and/or the conveyance circuit 6 of the liquid or gas between pump or compressor and pressing component 2a is obstructed, closed or a respective by-pass section is opened that does not flow into or towards the pressing component 2a, so that the rotation of the flywheel 7 does not result in a corresponding rotation of a second shaft 5d or rotation component of the pump 5 and/or a defined flow rate of liquid or gas in the conveying circuit 6 until it reaches or so as to operate the pressing component 2a and move it. Therefore, in the second operating condition, the rotation of the flywheel 7 by the motor 3 does not result in a displacement of the pressing component 2a for one or more of the above causes.

Thus, in the second operating condition, the force or energy or power applied by the engine 3 to the flywheel 7 is not dispersed or better used to turn the second shaft 5d or a rotation component of the pump or compressor to push the respective liquid or gas up to or so as to operate the pressing component 2a or in any case it is dispersed or used much less than in the first operating condition.

Thanks to this, in the second operating condition, in the absence of the resistance or dispersion determined by the movement of the pressing component 2a, the motor 3 is able to appropriately increase the revolutions of the flywheel 7 and to actually "load" the same, that is to say to provide this component with energy or power to be returned at least in part during the first operating condition.

In this regard, the flywheel 7 and the other components are sized so that it discharges or reduces its rotational speed by a defined percentage, for example less than 40%, 30% or 20% during a part of the processing cycle corresponding to the first operating condition.

In essence, when the movement of the pressing component 2a has been carried out as desired, if desired, when the pressing step of a workpiece is terminated, the energy used by the flywheel 7 to drive the pump or compressor and properly push the liquid or gas in the circuit 6 up to or so as to operate the pressing component 2a determines a reduction in the revolutions of the flywheel, for example from about 1500 rpm to about 1300 rpm.

As will be understood, therefore, the flywheel 7 instead receives and in fact accumulates in successive steps, the power or energy of rotation from the motor 3 during the second operating condition and preferably both during the first and during the second operating condition, as long as, of course, the engine 3 is switched on.

To better explain this concept, the flywheel 7 is fixed or keyed on the main shaft 4 or on an auxiliary shaft 7a rigidly coupled to it or integral therewith or the flywheel 7 is in a single piece with the main shaft 4 or with any auxiliary shaft 7a, so by operating the engine 3 the latter drags into rotation the flywheel 7, preferably, but not necessarily with the same rotational revolutions, this is to say that auxiliary shaft 7a and shaft 4 of the motor 3 rotate preferably with the same number of revolutions.

Therefore, if the auxiliary shaft 7a is not provided, then a single main shaft 4 would be envisaged, which in this case could also act, in fact, as the rotor of the engine 3.

Moreover, the main shaft 4 or, if provided the auxiliary shaft 7a, could, in accordance with a variant be in a single piece with the flywheel 7.

If a constant power regulator is provided, this guarantees that, regardless of the power that the flywheel 7 can deliver, the pump 5 always works with the same power.

In such expedient is not employed, the flywheel 7 would tend to deliver or discharge the energy accumulated in it even in a short time and could also deliver Megawatts when the operation is switched from the second to the first condition, which condition clearly could determine the breakage of the pump.

The constant power regulator, which can be electronic and/or mechanical, instead ensures that, clearly in combination with the control unit, the ratio between flow rate x pressure of the liquid or gas delivered by the pump 5 or compressor is substantially constant.

Thus, for example, the constant power regulator could be set so that the pump delivers a maximum value between 200 and 400 kW or between 250 and 350 kW.

Therefore, regardless of the power that the flywheel 7 could transmit to pump 5, the latter absorbs from the flywheel to the maximum the value imposed by the constant power regulator.

In essence, if a constant power regulator is used, there would be a switching between the first and second operating conditions depending on whether or not the press is in the pressing step and therefore during the pressing (first operating condition) a specific and appropriately variable control of the operation of the pump or compressor in the first operating condition.

The same would clearly apply in the case of constant pressure or flow rate regulator, although in accordance with the respective operating schemes.

Of course, in a less preferred version the control component 8b only regulates or determines the transition between the first and second operating conditions and does not act instead as a regulator of power, pressure, flow rate or other.

Clearly, separate components could also be provided for the performance of such functions, then one for switching between first (pressing) and second (rest) operating condition and the other to set the constant power, pressure or flow rate during pressing or first operating condition.

Of course, the main shaft 4 and the auxiliary shaft 7a preferentially both rotate around the same axis of rotation.

The auxiliary shaft 7a, if provided, may have a diameter larger, for example between 3/2 and 5 times, than the main shaft 4.

The flywheel 7 or the respective auxiliary shaft 7a can then be integral in rotation, opposite to the motor 3, by means of a special second shaft or pin 5d or rotation component with the pump 5 or compressor, so that the rotation of the flywheel 7, placed and maintained (at least during the first operating condition) in rotation by the motor 3, determines a rotation of a respective second shaft of the pump 5 or compressor.

In this regard, the auxiliary shaft 7a is rigidly coupled or integral with the second shaft 5d or rotation component of the pump 5 or compressor, so by driving the motor 3 the latter drags into rotation the flywheel 7 and the latter, in turn, puts the second shaft 5d in rotation, preferably with the same rotation revolutions, this means that auxiliary shaft 7a and second shaft 5d rotate preferably with the same number of revolutions.

The auxiliary shaft 7a and the second shaft 5d preferably both rotate around the same axis of rotation.

The auxiliary shaft 7a may have a diameter larger, for example between 3/2 and 5 times, than the second shaft 5d.

Of course, if an interception component, such as a clutch, is provided as a switching component, it would be possible to decouple flywheel 7 and pump 5 or compressor, so that a rotation of the flywheel 7 would not result, in the period of intervention of the interception component, in a rotation of the pump or compressor or rather of a respective second shaft.

Clearly, if an interception component is provided, the first operating condition would be with the interception component deactivated or in any case not such as to decouple auxiliary shaft 7a and second shaft 5d or rotation component of the pump or compressor, while the second operating condition would be with activated interception component or in any case such as to decouple auxiliary shaft 7a and second shaft 5d.

Preferably, the flywheel 7 is a disc-shaped or ring component defining a through axial opening 7b for the passage of the respective rotation shaft 7a corresponding or integral in rotation with the main shaft 4 of the motor 3 and drive of the pump or compressor.

In this case, the auxiliary shaft 7a preferentially protrudes from both sides of the flywheel 7, so that each end 7c, 7d of auxiliary shaft 7a protrudes from a respective side of the flywheel 7. The same applies in the case of auxiliary shafts in a single piece with the flywheel 7.

The flywheel 7 has a diameter between about 600 mm and 3 m, for example a diameter between about 900 mm and 1.5 m, if desired between about 1 and 1.2 m or between 1.8 and 2.2 m. Even more preferably, at least one flywheel 7 has a thickness between about 200 and 1000 mm, for example between about 300 and 500 mm, if desired with a thickness of about 380-400 or 390 mm.

If the flywheel 7 has not a circular base, it could still have a cross section or in any case an extension in a plane orthogonal to that of rotation equal to about 0.5-4 m², if desired about 0.8-1.2 m² or 0.9-1 m².

Advantageously, the flywheel 7 is made of metal, such as steel, but the same could also be made of other materials, for example, even a composite material.

As already partly indicated, the main shaft 4, the flywheel 7 (or rather a respective auxiliary shaft 7a) and a pin or second shaft 5d or a rotation component of the pump 5 are mounted for rotation around the same main extension axis x-x. In that case, the second y-y axis can be aligned to the x-x axis.

Clearly, any suitable components such as bearings, e.g. axial and/or radial thrust bearings, oil seals, labyrinths and/or other suitable components, may be used for the connection and transfer of motion between these components.

Going into more detail in the non-limiting specific structure of the drive group 1 shown in figures, it will be noted that among main shaft 4 of the motor 3 and auxiliary shaft 7a of the flywheel 7 can be provided a first connecting splined pin 10a and/or between auxiliary shaft 7a of the flywheel 7 and second shaft 5d of the pump 5 can be provided a second connecting splined pin 10b.

In this regard, a first splined pin 10a for connecting and kinematic linking main shaft 4 and auxiliary shaft 7a and/or a second splined pin 10b for connecting and kinematic linking auxiliary shaft 7a and second shaft 5d of the pump 5 can be provided.

More specifically, the first splined pin 10a could be fitted or fixed on one side in one end or tip of the main shaft 4 distal from the engine and on the other in one end 7c of the auxiliary shaft 7a.

The second splined pin 10b instead could be fitted or fixed on one side in one end or tip of the second shaft 5d distal from the pump body and on the other in an end 7d of the auxiliary shaft 7a.

Using splined pins 10a, 10b can be provided because in the event that one should damage the engagement between engine 3 and flywheel 7 or between flywheel 7 and pump 5, it would be satisfactory to change this pin 10a, 10b only, possibly replacing it with a constraint by screws. Should instead such a splined pin 10a/10b not be provided, if one should damage the fitting or engagement between engine 3 and flywheel 7 or between flywheel 7 and pump 5, one should change all the respective component.

Clearly, according to a less preferred variant, one or both splined pins 10a, 10b are not provided, but other means of kinematic connection could be envisaged or the various shafts, for example shafts 4 and 7a, could be made in single piece.

The drive unit 1 is clearly equipped with a main support unit 14, which can have any suitable configuration.

With reference to the non-limiting embodiment shown in figures, the support unit 14 includes a base 15, fixed to the ground for example by means of bolts 15a or similar means, vertical walls 18, which support the different components of group 1, protruding from the base 15.

More specifically, one or more of those walls 18 define a through opening or an upper cradle zone 18a in which or on which a shaft is mounted and supported, for example the main shaft 4 or the auxiliary shaft 7a with interposition of special bearings, if desired rolling bearings 16.

As one will understand, the flywheel 7 during operation accumulates a lot of energy, so it is preferable that it is mounted on a designated structure.

In this regard, such a wall 18 could have a lower section 18b and an upper section 18c thicker than the lower section and having a free end defining the cradle zone 18a, the two sections 18b, 18c being appropriately connected to each other, for example welded.

In the press according to the invention, group 1 also includes one or more upper closing components 19, if desired C-shaped, each couplable, for example by means of screws or bolts, with a respective vertical wall 18 to close from above the cradle zone 18a and the main shaft 4 or auxiliary shaft 7a provided therein, with interposition of special bearings.

Such a structure with wall 18 defining a cradle zone 18a and possible closing component 19 or in any case with a supporting part can be provided both on the side of the motor 3 and on the side of the pump 5, so that both ends 7c, 7d of the auxiliary shaft 7a or two ends or parts (if desired an end and an intermediate part) of the main shaft 4, each protruding from a respective side of the flywheel 7, would be supported by the main support unit 14, for example at respective cradle zones 18a.

Advantageously, the group 1 includes at least one bell or frame component 20, 21 for support, if desired cantileveringly supporting, of motor 3 and/or pump 5, which bell or frame component 20, 21 is supported, if desired cantileveringly supported by a respective wall 18.

More specifically, this bell or frame component 20, 21 can be cantileveringly supported by a wall 18 or by a respective upper section 18c, if desired by a piece of the respective cradle zone 18a.

Such a bell or frame component 20 for the engine 3 may include, for example, a first ring element 20a constrained to an upper section 18c of a wall 18, a second annular element 20b, if desired defining inspection slots 20c and ending with a flange 20d that can be constrained, for example by bolts to a respective flanged part 3a of the engine 3.

A bell or frame component 21 for the support of a pump 5 can instead include, for example, a first annular element 21a constrained to an upper section 18c of a wall 18, a second annular element 21b, if desired defining inspection slots 21c and ending with a flange 21d that can be constrained, for example by bolts to a respective pump 5.

Moreover, the support unit 14 can also define a sort of zone for at least partially containing the flywheel 7, so as to wrap at least a lower part of the same, approximately corresponding to at least 40% of the flywheel 7.

The drive unit or the press could then also be equipped with bottom anchor bolts 17 that must be embedded in the foundation cement to constrain the drive group 1 or the respective press to the ground. In this case, the anchor bolts 17 could be integral or fixed to the base 15, if desired fixed, for example welded or integral to the bolts 15a.

If desired, the drive unit provides two or more pumps 5 in communication with each other, more specifically two pumps 5 driven by the same second shaft 5d or rotation component, so that by operating one pump the second pump is automatically activated. In this case, one or both pumps 5 would be hollow or in any case would define a passage light of the second shaft 5d. Alternatively, other components can be provided for the operation of both pumps 5 by means of the same second shaft 5d or the same component driven in rotation by the main shaft 4 or rather the auxiliary shaft 7a.

It will also be understood that owing to this expedient, it is possible to optimize the space, as using for example a pump with double displacement, one could make it to rotate more slowly, but since the energy transmitted by the flywheel 7 is a function of the speed squared, it is of interest to rotate the flywheel 7 faster keeping it as small as possible, so it is better to put two or more small pumps rather than a large one.

Actually, in this way one can keep the overall structure more compact, decreasing the number and size of flywheels.

In this description reference will be made in some places to a pump, but it will be understood that the same description applies to the case in which a drive unit includes two or more pumps as indicated.

It will also be noted that a plurality of drive groups 1 could all be supported by the same base 15, if desired, but not necessarily, with their respective main extension axes x-x parallel with each other, so that the drive groups 1 would in fact extend one next to the others.

According to the embodiment illustrated in figures, there are one, two or more rows of five, six or seven drive groups 1 mounted on the same base, although two, three, four, six or more groups together could also be clearly provided.

Moreover, in such a case, a conveying circuit 6 of liquid or gas could be envisaged single for all the groups 1 or several conveying circuits 6 for each drive group 1 or even an intermediate solution between these.

Therefore, two, some or all drive groups 1 may have a common intake 6a and/or delivery 6b duct or in any case a manifold 6c from which derive and/or in which flow the respective intake 6a and/or delivery 6b ducts of the conveying circuit 6. Of course, if a reverse delivery pump is used, no distinction between the suction duct and the delivery duct could occur.

The press IP also includes an electronic unit for controlling, advantageously programmable, the components of the press itself, such as in particular the motor(s) 3 and the regulator(s) or control component(s) and, if desired, also one or more valves.

Of course, the electronic control unit can integrate or include the control component(s) 8b of the switching component(s) 8a or the control component 8b can be in electronic communication with the control unit for the appropriate performance of analysis, verification or data storage steps.

Of course, there could be a single switching component 8a for all groups or a specific one for each group or only for some groups of the press IP.

Similarly, if more than one switching component 8a is provided, a single control component 8b could be provided for all switching components 8a or a specific one for each switching component or only for some switching components 8a of the press IP.

As indicated above, the press IP also includes a base component 2b, while the at least one drive unit 1 is responsible for supplying liquid or gas to the pressing component 2a to move it closer and further away from the base component 2b for pressing objects OB in the pressing area or pressing zone PZ in accordance with the respective work cycles of the press IP.

Of course, the area or pressing zone PZ where the pieces or objects OB to be processed are arranged is defined between base component 2b and pressing component 2a.

Clearly, one could alternatively have a fixed top component and a pressing plate that can be lifted/lowered for approaching/moving away from the top component by means of the liquid or gas conveyed through the conveying circuit 6.

Preferably, one, some or all drive groups 1 are arranged outside the main support structure 24.

Even more preferably, one, some or all drive groups 1 are arranged in an hollowed area or pit RZ of the press or in any case are arranged on the ground or close to the ground, that is to say raised at a distance from the ground less than half a meter or rather less than ten to twenty cm.

Even more preferably, one, some or all drive groups 1 are not mounted above the pressing zone PZ.

Alternatively, the groups 1 could be placed on an anti-vibration system resting on the ground, this is not so much because the groups generate vibration, but to protect them from external vibrations.

The arrangement of groups 1 is clearly important, because, given in particular the size of flywheel 7, it is very heavy and placing it very high above the ground would risk jeopardizing the safety of operators.

If the group(s) are placed as now indicated would avoid vibrations, giving stability or solidity to the system.

If a hollowed area or pit RZ of the press IP is provided for housing the groups, it could have a depth of up to 2-4 meters from the ground or in any case from the ground level on which the main pressing structure of the press IP is mounted.

A press according to the present invention would clearly have the normal components expected in machines of this type.

In this respect, a main pressing structure 24 having uprights or components of sliding support 25 of the pressing component 2a and equipped for example with rails or similar for guiding the displacement of that component 2a could clearly be envisaged.

The expression "sliding support" clearly indicates that the pressing component 2a is mounted and supported by the supporting uprights or components 25 in such a way that it can slide on the latter with any suitable effort, for example of the shoe and guide type.

More specifically, the pressing component 2a is actually a slide or "ram" that slides along the uprights 25 or in any case along vertical sections of the main pressing structure 24.

The pressing component 2a bears or in any case is integral in translation, preferably vertical, with a first semi-mold, while the other or second semi-mold of the press is made by or integral with or mounted on the base component 2b.

In essence, the first semi-mold can be moved in translation in approach-away from the second semi-mold.

The main pressing structure 24 can then include a head 26, which is preferably the upper part that actually holds or supports the thrust of the press.

The hydraulic or oleodynamic or pneumatic press IP then includes one or more actuators or systems 11a, 11b, 11c with one or more hydraulic or oleodynamic or pneumatic cylinders 11a1, 11b1, 11c1 and piston 11a2, 11b2, 11c2, mounted and supported always within the main pressing structure 24, each with at least one cylinder fixed or integral or non-movable with respect to the main pressing structure 24 or better to the respective head 26 and one end of at least one piston slidingly mounted within the cylinder as well as integral in translation or displacement with the slide or ram or crossbar 2a or vice versa, then with the at least one piston having one end fixed or integral or non-movable with respect to the main pressing structure 24 or to the head and the cylinder in which the piston is slidingly mounted integral in translation or displacement to the slide or ram or crossbar 2a.

The expression "integral in translation or displacement" in relation to the cylinder 11a1, 11b1, 11c1 naturally means that the cylinder, as a result of the liquid or gas fed in the same moves together with the pressing component 2a and a similar meaning applies to the case where the piston 11a2, 11b2, 11c2 is integral in translation or displacement with the pressing component 2a.

With regard to the detailed mode of interaction between pressing component 2a and conveying circuit 6 or rather between liquid or gas in the conveying circuit 6 and pressing component 2a, in at least one cylinder 11a1, 11b1, 11c1 flows a supply section of conveying circuit 6 so as to dispense the liquid or gas within that cylinder and thus control the stem or piston 11a2, 11b2, 11c2 to come out the cylinder 11a1, 11b1, 11c1 and thus push the pressing component 2a appropriately.

Of course, a return section of the conveying circuit to the pumps or compressors would also extend from such a cylinder 11a1, 11b1, 11c1, which return section would determine the re-insertion of the stem or piston 11a2, 11b2, 11c2 in the cylinder 11a1, 11b1, 11c1.

Of course, one could provide a different configuration, and thus with different hydraulic actuators.

In any case, a press according to the present invention provides that the conveying circuit 6 opens directly into at least one cylinder 11a1, 11b1, 11c1 of at least one hydraulic actuator 11a, 11b, 11c which is mounted within and preferably on top of a main pressing structure 24.

There are therefore no intermediate components, for example motors, hydraulic actuators powered by the conveying circuit and which are outside this main structure with then means of transmission of motion or kinematics from these actuators to the ram.

With specific reference to the embodiment of figure 8, it concerns a press according to the present invention with simple effect actuators and delivery inversion pump with semi-closed circuit.

In this regard, at least one main actuator 11a is present, which is arranged to close the press or to approach the slide or ram or crossbar 2a to the base component 2b to carry out the pressing steps and at least one secondary actuator 11b (two according to the embodiment illustrated in figures) arranged to open the press or remove the slide or ram or crossbar 2a from the base component 2b at the end of a pressing step. Therefore, the at least one main actuator 11a and the at least one secondary actuator 11b both act on the slide or ram or crossbar 2a but so as to move it one in direction opposite to the other.

The conveying circuit 6 instead extends between the ends of pump 5 or compressor and the actuators 11a, 11b or rather respective cylinders 11a1, 11b1 of the same.

The circuit 6 includes in this case, respective branches intercepted by valves of the valve group, for example one, two or more compensation and intake valves 13a and/or one, two or more pressing overpressure valves 13b and/or one or more pre-filling and rapid discharge valves 13c and clearly one or more valves to be driven to control the opening and closing of the press which may also be one of the now indicated valves.

The valves could be of any suitable type, for example restraint or unidirectional, suitably loaded for example elastically loaded or however stressed, slide, ball or other type. Moreover, the valves could be unidirectional or two-, three- or more-way.

In addition, at least one auxiliary tank 12 can be provided in fluid communication with the circuit 6. More specifically, respective sections of discharge of liquid or gas of the circuit 6, if desired appropriately intercepted by valves, for example pressing overpressure valves 13b flow in the tank 12 and from it (tank 12) sections of liquid or gas inlet in the circuit 6 extend.

The press can then include a flow rate regulator with flow reversal and pressure control that serves for controlling the pump 5 and switching the operation of the same.

According to this embodiment, the suction duct during an operating cycle could become a delivery duct in a subsequent operating cycle in which the operation of the pump has been reversed and vice versa, so it would not be possible to identify a suction duct that remains so for all the operating cycles of the press. Alternatively, the pump could have at least three mouths, one suction and two delivery mouths, in which case the suction duct would always remain the same during each operating cycle, while the pump would direct the fluid alternately first in a first delivery circuit and then in a second delivery circuit.

As for the embodiment in figure 9, it concerns a press similar to that of figure 8, but with a double-acting actuator.

In this regard, at least one actuator 11c is provided alternately responsible for closing the press or bringing the slide or ram or crossbar 2a closer to the base component 2b to conduct the pressing steps and (in a subsequent working step) to open the press or to move the slide or ram or crossbar 2a away from the base component 2b at the end of a pressing step.

In this case, the conveying circuit 6 extends between the ends of pump 5 or compressor and the actuator 11c or rather respective sections of the cylinder 11c1 of the same one opposite to the other with respect to the piston head 11c2 mounted in the cylinder 11c1.

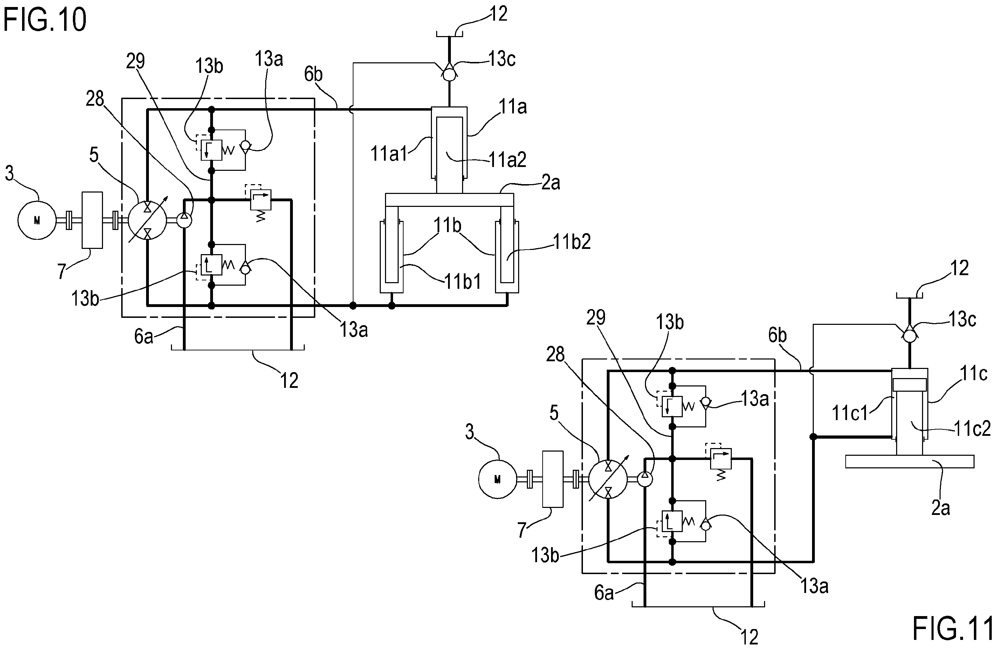

Referring now to the embodiment of press of figure 10, it is similar to that of figure 8, and thus with simple effect actuators and delivery inversion pump, but with closed circuit.

In such a case, conveying circuit 6 is called closed, as there is no auxiliary tank 12 in fluid communication with it.

At least one auxiliary tank 12a can be provided, but the same is part of and is in fluid communication with means arranged to put the circuit 6 under pressure, which means include an auxiliary pump component 28 and auxiliary ducts 29, if desired intercepted by means of respective valves and are responsible for connecting the auxiliary pump component 28 with the auxiliary tank 12.

In this case, the auxiliary pump component 28 is arranged to properly drive the pump or compressor 5 so as to ensure the forced suction of the main pump 5 in the two directions of delivery.

As for the embodiment of figure 11, it concerns a press similar to that of figure 10, but with a double-acting actuator.

Referring now to the embodiment of press of figure 12, it is similar to that of the above mentioned figures with simple effect actuators, but with pump with a single direction of delivery and open circuit.

According to this embodiment, the suction duct 6a of the pump 5 or compressor always remains a suction during all operating cycles and the same applies to the delivery duct 6b.

Clearly, even in this case, the circuit 6 would include respective branches intercepted by valves of the valve group, for example one, two or more pressing overpressure valves 13b and/or one or more pre-filling and quick discharge valves 13c and/or one or more main control valves 13d.

As for the embodiment in figure 13, it concerns a press similar to that of figure 12, but with a double-acting actuator.

Of course, the diagrams of figures 8 to 13 are only examples and different structures could be adopted with reference to the actuators, the pump, the branches of the circuit and/or the valves.

Alternatively, the press IZ could be equipped with a pressure multiplier into which the conveying circuit 6 flows and which is then in fluid communication, through a special conveying circuit of liquid or auxiliary gas with an actuator or cylinder and piston system of the hydraulic or oleodynamic or pneumatic press.

According to this variant, at least one pump 5 instead of sending oil or water directly into the cylinder or cylinders, sends it in a pressure multiplier that serves to increase the pressure of the liquid at the expense of the flow rate.

Such a multiplier could, as is known, have a small cylinder-piston group and a large cylinder-piston group, in which case, the oil or water conveyed by the pump or pumps 5 would act directly on the large cylinder-piston group and this would determine a displacement of the small cylinder-piston group with displacement of a respective fluid or liquid, thereby multiplying the pressure to the detriment of the flow rate.

Thus, also pressures of 800-1000 bar of the fluid or liquid actually fed in the hydraulic actuators of the press could be obtained, while a traditional pump is able to deliver fluids with a pressure of about 350-400 bar.

Of course, an intermediate solution could also be envisaged in which the at least one pump 5 is in direct communication both with the hydraulic actuators of the press and with the multiplier in turn in communication with these actuators, in which case one could decide depending on the needs whether to operate in normal pressing conditions or even in conditions of enhanced pressing.

The pistons of the actuators of a hydraulic press slide, preferably, in the axial direction only, i.e. in the direction of approach-removal of pressing component 2a and base component 2b.

In general, a press according to the present invention is a machine that provides for energy absorption pauses from at least one drive group 1, as the intervals when the drive groups are not used are exploited to bring or bring it again the flywheel 7 in rotation to the desired number of revolutions.

By way of not limitative example only, a press according to this invention can operate so that the first condition or first operating conditions, during which the pressing takes place, has a duration, if desired between 1/2 and 1/6, for example between 1/3 and 1/4 or even less than a second condition or second operating conditions, during which the pressing component 2a is not moved.

Of course, particularly in the case of a power, pressure or flow rate regulator, the delivery conditions (pressure/flow rate) of the liquid or gas during the first operating conditions may vary depending on the pressing needs.

In this regard, the regulator could also act according to the object to be pressed and therefore as an alternative or in addition to the needs during the various pressing steps.

With regard to this aspect, with a press according to this invention it is possible to perform a respective method of processing or treatment of pieces or objects OB.

In this regard, with the pump 5 in the second operating condition the motor 3 is placed in rotation which drags the flywheel 7 in rotation until it reaches a certain first number of revolutions per minute, for example about 1500 revolutions per minute.

As above indicated, in the second operating condition the pump 5 or the compressor does not move or push or rather is not able to move or push the liquid or gas in the conveying circuit 6, or moves or pushes it to an extent or with a flow rate or power lower than the first operating condition.

In essence, in this step, even if the motor 3 drags in rotation the flywheel 7, the latter does not transfer the rotary motion to pump 5 or to the compressor or to a second shaft 5d of the same or in any case does not drive pump 5 or does not drive it in such a way as to push or move, by means of the fluid conveyed in the conveying circuit 6 by the pump 5 or compressor, the pressing component 2a.

At this point, once it is necessary to make a displacement of the pressing component 2a, it is switched, by actuation of the switching component 8a, if desired by means of the control component 8b, the pump or compressor and/or the discharge or by-pass of the conveying circuit 6 in or in a first operating condition, in which the pump or compressor can move or push the liquid or gas in the conveying circuit 6 until it reaches or so as to operate the pressing component 2a, as a result of the motion imparted to it by the flywheel 7, with a flow rate or power such as to move it.

In this regard, in the first operating condition, the pump or compressor or rather a respective second shaft 5d is kinematically coupled to the flywheel 7 and furthermore the pump and the conveying circuit 6 are arranged in such a way as to be able to push the liquid or gas into the conveying circuit 6 directly (therefore without intermediate components, for example, motors, hydraulic actuators powered by the conveying circuit and which are outside this main structure with then means of transmission of motion or kinematics from these actuators to the ram) or with the sole interposition of a pressure multiplier component up to or so as to operate the pressing component 2a so as to move it or with a flow rate or power such as to move appropriately the pressing component 2a.

Then as a result of this, the pressing component 2a is properly moved, for example so as to perform the desired processing (for example pressing) and this thanks to the action of flywheel 7 which was previously brought to a certain number of revolutions by the engine 3.

Preferably, during this step, when then the flywheel 7 transfers the power to the pump 5, the motor 3 will probably go to maximum torque to try to bring the flywheel 7 back to the revolutions (e.g. 1500) to which it turned as long as the second operating condition was active. However, as long as the first operating condition is active, the flywheel 7 is slowed down because the engine 3, if switched on, does not fully compensate for the power or energy absorbed by the pump or compressor to move the pressing component 2a, so it cannot rotate at the same revolutions at which it rotated during the second operating condition. Alternatively, the engine 3 could be properly decoupled by any suitable means from the flywheel 7 during the first operating condition.

Advantageously, it could also be varied, depending on the pressing needs, the flow rate of the pump 5 or compressor (if with variable flow rate) or even other variables/components of the pump or circuit so as to vary the flow rate/pressure of the liquid or gas delivered by the circuit during the or rather the first operating conditions.

In this regard, once the pressing is finished, it is necessary to take the pressing component 2a back to its initial position and this can always be done thanks to the liquid or gas conveyed by pump 5 or compressor or even in another way.

If it is the task of the pump 5 or compressor to take the pressing component 2a back to the initial position away from the base component 2b, then this could for example be done with simple or double acting actuators as indicated above.

In the case of a reverse delivery pump, then there would be an initial first operating condition during the closure of the press and then the approach of the pressing component 2a to the base component 2b and, after switching the delivery and suction of the pump, a subsequent first operating condition during the opening of the press and the removal of the pressing component 2a.

With reference to the embodiment of figures 6 and 7, in the initial first operating condition, one could have the plate 5c at an angle Θ > 0 or in any case moved in one direction with respect to Θ = 0 and in the next first operating condition the plate 5c is moved so as to delimit an angle Θ < 0 or in any case moved in an opposite direction with respect to the previous condition.

As indicated above, the power applied during the closing of the press and therefore during the approach of the pressing component 2a to the base component 2b could be the same as the opening phase of the press and therefore during the removal of the pressing component 2a from the base component 2b. Alternatively, one could have power applied during the opening step of the press less than the closing step of the same.

Therefore, in the case of a pump made as shown in figures 6 and 7, the angle Θ during the closing of the press could have the direction opposite but the same entity at the angle Θ during the opening of the press, or it could even be greater than the latter.

Once the displacement or machining (e.g. pressing) has been completed and the pressing component 2a has been returned to the rest position or position away from the base component 2b, the control component switches back to the second operating condition, so that for example the variable flow pump is brought back with plate 5c at an angle Θ = 0 or around that condition, or a clutch is operated so as to decouple auxiliary shaft 7a and second shaft 5d or a by-pass or exhaust of the conveying circuit 6 is opened, so that it does not flow or the respective liquid/gas does not push the pressing component 2a.

In this condition, since energy or power is essentially no longer absorbed for the displacement of the pressing component 2a, the engine 3 will again be able to increase the revolutions per minute of the flywheel 7 bringing it back for example to the number of revolutions previously reached, for example 1500 revolutions per minute.

As it will be understood, thanks to a solution according to the present invention, it is possible to provide a new drive group of pressing components of a hydraulic or oleodynamic or pneumatic press, which allows, among other things, to use small electric motors while ensuring any necessary power peaks, as the electric motor, even not very powerful, could bring in a more or less long time a respective flywheel, in particular with large diameter, to a certain number of revolutions as long as the pump does not need power or in any case it is not necessary to conduct a processing.

However, when the flywheel has reached a predetermined high number of revolutions, if power is needed it is possible to switch the operation and put in communication flywheel 7 and pump 5 or open the fluid communication of the conveying circuit of the pump or compressor, so that the rotation of the flywheel 7 allows, thanks to the accumulated energy or power, to made to properly rotate or operate the pump or compressor and then move the relative pressing component 2a.

Thus, a solution according to the present invention exploits the pauses between one process and another to prepare by means of a motor 3, even of small dimensions, the flywheel 7 and bring it to a number of revolutions such as to operate, if required, a pump or a compressor in order to obtain a respective appropriate displacement of a pressing component, for example, a pressing component 2a of a press.

A press according to the present invention therefore obviously guarantees an economic and effective operation, as it uses motors, for example small electric ones, but it still manages to guarantee to provide power peaks necessary for a hydraulic or oleodynamic or pneumatic press.

Preferably, in the event that more than 1 drive groups are provided, the electronic control unit is able or responsible for reversing, if desired by means of a special inverter, the operating mode of at least one first drive group 1 from motor to generator, while at least another or second drive group 1 is maintained with motor operating mode, so that it is possible to control the other or second drive group 1 by means of the energy generated by the first drive group.

With regard to this aspect, for example in the event that the electrical supply of the press or drive groups is missing, if a workpiece is in the press, for example closed in the pressing area, it would be necessary to open the press or the pressing zone and extract the workpiece, in order to avoid that, given the high temperatures, fires arise in particular due to the presence of oil in the press.

In this case, the control unit could reverse, for example by means of a special inverter, the operation of one or more second motors 3, so that the other/s first motors would continue to drag the flywheel 7 or the respective flywheels 7 in rotation. At this point, the second engine(s) would therefore tend to slow down the flywheel or flywheels 7, for example from 1500 rpm to 1480 rpm, so that the second engines should, in fact, brake and become generators, since to brake it is necessary to send out of current, which could be conveyed by the electronics for the first or first engines or, if it is not needed or it is too much, even on the network or in a special accumulator.

It is thus possible to obtain a safety function, keeping the press in operation even without the mains electric current and in this case the operator can secure the press by removing the pieces to be worked, then waiting for the current to return from the network.

A press according to the present invention can therefore also be equipped with systems such as to guarantee the extraction of pieces from the press even in the absence or lack of electricity supply.

A press according to the present invention is preferably open-circuit, although it could also be closed-loop.

With reference to this aspect, with the closed circuit it is possible to make feedback to regulate the flow rate delivered and make any corrections.

In this regard, if the control unit establishes that the speed to be given to the ram is for example 50 mm per second, in the event that a special sensor detects that the speed is lower, the control unit could determine variations (for example tilting of the plate or pump plate) so as to obtain the desired feed speed.

Modifications and variants of the invention are possible within the scope of protection defined by the claims.

## Claims

1. Hydraulic or oleodynamic or pneumatic press comprising a pressing component (2a) and a base (2b) or top component defining with said pressing component (2a) an area or pressing zone (PZ) where to arrange pieces or objects (OB) to be processed, said press further comprising at least one drive group (1) arranged to feed liquid or gas to said pressing component (2a) in order to move it towards and away from said base (2b) or top component for pressing objects (OB) in the pressing area or zone (PZ), said drive group comprising:
- at least one motor (3) arranged to drag a respective main shaft (4) in rotation,
- at least one pump (5) or a compressor arranged to suck and discharge a liquid or a gas for the displacement of said pressing component (2a),
- at least one circuit for conveying (6) said liquid or gas in suction, crossing and delivery from said at least one pump (5) or compressor, which conveying circuit (6) is arranged to suitably convey the liquid or gas for pushing or in any case moving or displacing said pressing component (2a),
- at least one switching component (8a) for switching between at least one first operating condition and at least one second operating condition of said at least one pump (5) or compressor and/or a discharge or by-pass of said conveying circuit (6),
said group further comprising at least one flywheel (7) interposed between said at least one motor (3) and said at least one pump (5) or a compressor, said at least one flywheel (7) being kinematically connected
on the one hand, to said at least one main shaft (4), so that said at least one flywheel (7) is dragged into rotation by the latter, and
on the other hand, to said at least one pump (5) or compressor to transfer thereto the rotary motion imparted by said at least one motor (3), so that
said at least one pump (5) or said compressor moves or pushes said liquid or gas into the conveying circuit (6) and up to or so as to actuate a respective pressing component (2a) following the motion imparted to it by said at least one flywheel (7) only in the at least one first operating condition or to a greater extent in the at least one first operating condition, while in said at least one second operating condition said at least one pump (5) or said compressor does not move or pushes said liquid or gas into the conveying circuit (6) until or so as to actuate a respective pressing component (2a) or moves or pushes it into the conveying circuit (6) and until or so as to actuate a respective pressing component (2a) to an extent or flow rate or power lower than the at least one first operating condition,
said at least one flywheel (7) receiving the rotation energy from said at least one motor (3) at least during the at least one second operating condition,
said press further comprising an electronic control unit,
wherein said at least one main shaft (4), said at least one flywheel (7) and a pin or second shaft (5d) or rotation component of said at least one pump (5) or compressor are mounted for rotation around the same axis (x-x),
wherein said at least one flywheel (7) is fixed or keyed on or in a single piece with the main shaft (4) or on or in a single piece with an auxiliary shaft (7a) rigidly coupled or integral in rotation with said main shaft (4), whereby by activating said at least one motor (3) the latter put into rotation said at least one flywheel (7).
wherein each end (7c, 7d) of said auxiliary shaft (7a) or of said main shaft (4) projects from a respective side of the flywheel (7) and wherein said drive group (1) is provided with a main support unit (14) having a base (15) and vertical walls (18) extending from the base (15) and defining a through opening or an upper cradle zone (18a), a respective end (7c, 7d) or intermediate part of said auxiliary shaft (7a) or of said main shaft (4) being mounted and supported therein or thereon,
wherein said at least one flywheel (7) is disc- or ring-shaped with a diameter between about 600 mm and 3 m,
**characterized in that**
said press further comprising one or more upper closing components (19), each couplable with a respective vertical wall (18) to close from above the cradle zone (18a) and the auxiliary shaft (7a) or the main shaft (4) provided therein, with interposition of special bearings, such a structure with vertical wall (18) defining a cradle zone (18a) and closing component (19) being provided both on the side of the motor (3) and on the side of the pump (5), so that both ends (7c, 7d) of the auxiliary shaft (7a) or two parts of the main shaft (4), each protruding from a respective side of the flywheel (7), would be supported by the main support unit (14) at respective cradle zones (18a).

2. Press according to claim 1, comprising a main pressing structure (24) having uprights or components (25) for slidingly supporting said pressing component (2a), said press further comprising at least one actuator or system (11a, 11b, 11c) with at least one hydraulic, oleodynamic or pneumatic cylinder (11a1, 11b1, 11c1) and piston (11a2, 11b2, 11c2), which actuator or systems is mounted and supported within the main pressing structure (24), said at least one conveying circuit (6) opening directly in at least one cylinder of said at least one actuator or system (11a, 11b, 11c) with at least one cylinder (11a1, 11b1, 11c1) and piston.

3. Press according to claim 2, wherein said at least one actuator or system (11a, 11b, 11c) with at least one cylinder (11a1, 11b1, 11c1) and piston (11a2, 11b2, 11c2) has a respective cylinder (11a1, 11b1, 11c1) fixed or integral or not movable with respect to the main pressing structure (24) and one end of a respective piston (11a2, 11b2, 11c2) slidingly mounted inside the cylinder (11a1, 11b1, 11c1) as well as integral in translation or displacement with the pressing component (2a) or has the respective piston (11a2, 11b2, 11c2) having an end fixed or integral or not movable with respect to the main pressing structure (24) and the cylinder (11a1, 11b1, 11c1), in which said piston (11a2, 11b2, 11c2) is slidingly mounted, integral in translation or displacement with said pressing component (2a).

4. Press according to claim 1 or 2 or 3, comprising a pressure multiplier, said at least one conveying circuit (6) opening in said pressure multiplier, said pressure multiplier being in fluid communication with an actuator or system with at least one hydraulic, oleodynamic or pneumatic cylinder and piston of the hydraulic or oleodynamic or pneumatic press.

5. Press according to any one of the preceding claims, wherein
in said at least one first operating condition, said at least one pump (5) or a compressor operates at a first delivery flow rate of said liquid or gas, whereas in said at least one second operating condition said at least one pump (5) or compressor operates at a second delivery flow rate lower than said first flow rate or at a second flow rate equal to zero, and/or
in said at least one first operating condition said discharge or by-pass being closed or partially closed, whereas in said at least one second operating condition said discharge or by-pass being open or not closed with respect to said at least one first operating condition.

6. Press according to any one of the preceding claims, wherein said pump is a variable flow-rate pump (5), while said switching component (8a) is arranged to vary the flow rate of the pump.

7. Press according to any one of the preceding claims, wherein said main shaft (4) or said at least one auxiliary shaft (7a) is integral in rotation, on the side opposite with respect to said at least one motor (3) and by means of a suitable second shaft or pin (5d) or rotation component with the pump (5) or compressor, so that the rotation of the flywheel (7) determines a rotation of a respective second shaft (5d) or rotation component of the pump (5) or compressor.

8. Press according to any one of the preceding claims, wherein said at least one drive group (1) includes at least one bell or frame component (20, 21) for cantileveringly supporting said at least one motor (3) and/or of said at least one pump (5) or compressor, which bell or frame component (20, 21) is cantileveringly supported by a respective vertical wall (18).

9. Press according to claim 8, wherein:
a bell or frame component (20) for the motor includes a first ring element (20a) constrained to an upper section (18c) of a wall (18), a second annular element (20b) ending with a flange (20d) constrained to a respective flanged part (3a) of the engine (3),
a bell or frame component (21) for supporting the pump (5) includes instead a first ring element (21a) constrained to an upper section (18c) of a wall (18), a second annular element (21b) ending with a flange (21d) constrained to a respective pump (5).

10. Press according to any one of the preceding claims, comprising a first splined pin (10a) and a second splined pin (10b) and wherein said first splined pin (10a) for connection is provided between the main shaft (4) of the motor (3) and an auxiliary shaft (7a) of said at least one flywheel (7), and/or said second splined pin (10b) of connection is provided between the auxiliary shaft (7a) of the flywheel (7) and second shaft (5d) of the pump (5).

11. Press according to any one of the preceding claims, comprising at least one component for controlling (8b) said at least one switching component (8a) for switching it between said at least one first operating condition and said at least one second operating condition.

12. Press according to claim 11, wherein said control component (8b) is a constant power regulator, which is such as to ensure that the power delivered by said at least one pump (5) or compressor is always the same.

13. Press according to any one of the preceding claims comprising a plurality of drive units, wherein said electronic control unit is arranged to reverse the operating mode of at least one first drive unit from motor to generator, while at least another or second drive unit is maintained in a motor operating mode, so that it is possible to control said at least one another or second drive unit by means of the energy generated by said at least one first drive unit.

14. Method of working or treating pieces or objects with a press according to any one of the preceding claims, comprising the following steps:
- placing said at least one pump (5) or compressor in the at least one second operating condition and putting into rotation said at least one motor (3) so as to drag said at least one flywheel (7) into rotation until taking said at least one flywheel (7) to a given first number of revolutions per minute,
- when it is necessary to move the pressing component (2a), operate the switching component (8a) so as to bring the pump (5) or the compressor and/or the discharge or by-pass into the at least one first operating condition, so that the actuation of the pump (5) or compressor by said at least one flywheel (7) determines a thrust of the liquid or gas in the conveying circuit (6) until or so as to actuate said pressing component (2a), in this step said at least one flywheel (7) being slowed down due to the power or energy absorbed by said at least one pump (5) or compressor for the displacement of the pressing component (2a),
- once the displacement of said pressing component (2a) has been completed, control said switching component (8a) again so as to switch the pump (5) or the compressor and/or the discharge or by-pass, in the at least one second operating condition, in the at least one second operating condition the motor (3) succeeding again in increasing the revolutions per minute of the flywheel (7) bringing it back to the first number of revolutions.

15. Method according to claim 14, wherein when the movement of the pressing component (2a) has been carried out and when the pressing step of a workpiece is terminated, the energy used by said at least one flywheel (7) to drive said pump (5) or compressor and properly push the liquid or gas in said at least one circuit for conveying (6) up to or so as to operate the pressing component (2a) determines a reduction in the revolutions of said at least one flywheel (7) from about 1500 rpm to about 1300 rpm.

## Patentansprüche

1. Hydraulische oder öldynamische oder pneumatische Presse, umfassend eine Presskomponente (2a) und eine Basis (2b) oder eine Oberkomponente, die mit der besagten Presskomponente (2a) einen Bereich oder eine Presszone (PZ) definiert, wo die zu bearbeitenden Teile oder Gegenstände (OB) anzuordnen sind, wobei die besagte Presse ferner mindestens eine Antriebsgruppe (1) umfasst, die so angeordnet ist, dass sie der besagten Presskomponente (2a) Flüssigkeit oder Gas zuführt, um sie zu der besagten Basis (2b) oder Oberkomponente zum Pressen von Gegenständen (OB) in dem Pressbereich oder der Presszone (PZ) hin und davon weg zu bewegen, wobei die besagte Antriebsgruppe umfasst:
- mindestens einen Motor (3), der so angeordnet ist, dass er eine jeweilige Hauptwelle (4) in Rotation versetzt,
- mindestens eine Pumpe (5) oder einen Kompressor, die/der so angeordnet ist, dass sie/er eine Flüssigkeit oder ein Gas zur Verdrängung der besagten Presskomponente (2a) ansaugt und ablässt,
- mindestens einen Kreislauf zum Fördern (6) der besagten Flüssigkeit oder des besagten Gases beim Ansaugen, Durchqueren und Abgeben von der besagten mindestens einen Pumpe (5) oder dem Kompressor, wobei der Förderkreislauf (6) so angeordnet ist, dass die Flüssigkeit oder das Gas zum Schieben oder in jedem Fall zum Bewegen oder Verdrängen der besagten Presskomponente (2a) in geeigneter Weise gefördert wird,
- mindestens eine Schaltkomponente (8a) zum Umschalten zwischen mindestens einem ersten Betriebszustand und mindestens einem zweiten Betriebszustand der besagten mindestens einen Pumpe (5) oder des Kompressors und/oder eines Ablasses oder einer Umgehung des besagten Förderkreislaufs (6),
wobei die besagte Gruppe ferner mindestens ein Schwungrad (7) umfasst, das zwischen dem besagten mindestens einen Motor (3) und der besagten mindestens einen Pumpe (5) oder einem Kompressor angeordnet ist, wobei das besagte mindestens eine Schwungrad (7) kinematisch verbunden ist
auf der einen Seite mit der besagten mindestens einen Hauptwelle (4), so dass das besagte mindestens eine Schwungrad (7) von letzterer in Rotation versetzt wird, und
auf der anderen Seite mit der besagten mindestens einen Pumpe (5) oder dem Kompressor, um darauf die von dem besagten mindestens einen Motor (3) verliehene Drehbewegung zu übertragen, so dass
die besagte mindestens eine Pumpe (5) oder der besagte Kompressor die besagte Flüssigkeit oder das besagte Gas in den Förderkreislauf (6) bewegt oder drückt und bis oder damit eine jeweilige Presskomponente (2a) betätigt wird, wobei sie/es der Bewegung folgt, die ihr/ihm durch das besagte mindestens eine Schwungrad (7) nur in dem mindestens einen ersten Betriebszustand oder in einem größeren Umfang in dem mindestens einen ersten Betriebszustand verliehen wird, während in dem besagten mindestens einen zweiten Betriebszustand die besagte mindestens eine Pumpe (5) oder der besagte Kompressor die Flüssigkeit oder das Gas nicht in den Förderkreislauf (6) bewegt oder schiebt, bis oder damit eine jeweilige Presskomponente (2a) betätigt wird, oder sie/es in den Förderkreislauf (6) bewegt oder schiebt und bis oder damit eine jeweilige Presskomponente (2a) in einem Umfang oder mit einer Durchflussrate oder Leistung betätigt wird, die geringer als der mindestens eine erste Betriebszustand ist,
wobei das besagte mindestens eine Schwungrad (7) die Rotationsenergie von dem besagten mindestens einen Motor (3) mindestens während des mindestens einen zweiten Betriebszustands erhält,
wobei die Presse ferner eine elektronische Steuereinheit umfasst,
worin die besagte mindestens eine Hauptwelle (4), das besagte mindestens eine Schwungrad (7) und ein Stift oder eine zweite Welle (5d) oder eine Rotationskomponente der besagten mindestens einen Pumpe (5) oder des Kompressors zur Rotation um dieselbe Achse (x-x) montiert sind,
worin das besagte mindestens eine Schwungrad (7) auf oder in einem Stück mit der Hauptwelle (4) oder auf oder in einem Stück mit einer Hilfswelle (7a), die starr mit der besagten Hauptwelle (4) gekoppelt oder drehfest mit ihr verbunden ist, befestigt oder verkeilt ist, wodurch durch Aktivierung des besagten mindestens einen Motors (3) letzterer das besagte mindestens eine Schwungrad (7) in Rotation versetzt,
worin jedes Ende (7c, 7d) der besagten Hilfswelle (7a) oder der besagten Hauptwelle (4) von einer jeweiligen Seite des Schwungrads (7) vorsteht und worin die besagte Antriebsgruppe (1) mit einer Hauptstützeinheit (14) versehen ist, die eine Basis (15) und vertikale Wände (18) aufweist, die sich von der Basis (15) aus erstrecken und eine Durchgangsöffnung oder eine obere Halterungszone (18a) definieren, wobei ein jeweiliges Ende (7c, 7d) oder ein Zwischenteil der besagten Hilfswelle (7a) oder der besagten Hauptwelle (4) darin oder darauf montiert und gestützt ist,
worin das besagte mindestens eine Schwungrad (7) scheiben- oder ringförmig mit einem Durchmesser zwischen etwa 600 mm und 3 m ist,
**dadurch gekennzeichnet, dass**
die besagt Presse ferner eine oder mehrere obere Verschließkomponenten (19) umfasst, die jeweils mit einer jeweiligen vertikalen Wand (18) verbindbar sind, um die Halterungszone (18a) und die Hilfswelle (7a) oder die Hauptwelle (4), die darin vorgesehen ist, durch Zwischenanordnung von Speziallagern von oben zu schließen, wobei eine solche Konstruktion mit einer vertikalen Wand (18), die eine Halterungszone (18a) definiert, und einer Verschließkomponente (19) sowohl auf der Seite des Motors (3) als auch auf der Seite der Pumpe (5) vorgesehen ist, so dass beide Enden (7c, 7d) der Hilfswelle (7a) oder zwei Teile der Hauptwelle (4), die jeweils von einer jeweiligen Seite des Schwungrads (7) vorstehen, von der Hauptstützeinheit (14) an jeweiligen Halterungszonen (18a) gestützt werden.

2. Presse nach Anspruch 1, umfassend eine Hauptpresskonstruktion (24) mit Ständern oder Komponenten (25) zum gleitenden Stützen der besagten Presskomponente (2a), wobei die besagte Presse ferner mindestens einen Aktuator oder ein System (11a, 11b, 11c) mit mindestens einem hydraulischen, öldynamischen oder pneumatischen Zylinder (11a1, 11b1, 11c1) und Kolben (11a2, 11b2, 11c2) umfasst, dessen Aktuator oder System innerhalb der Hauptpresskonstruktion (24) montiert und gestützt ist, wobei der besagte mindestens eine Förderkreislauf (6) direkt in mindestens einen Zylinder des besagten mindestens einen Aktuators oder Systems (11a, 11b, 11c) mit mindestens einem Zylinder (11a1, 11b1, 11c1) und Kolben mündet.

3. Presse nach Anspruch 2, worin der besagte mindestens eine Aktuator oder das besagte mindestens eine System (11a, 11b, 11c) mit mindestens einem Zylinder (11a1, 11b1, 11c1) und Kolben (11a2, 11b2, 11c2) einen jeweiligen Zylinder (11a1, 11b1, 11c1) aufweist, der fest oder einstückig oder nicht beweglich in Bezug auf die Hauptpresskonstruktion (24) ist, und ein Ende eines jeweiligen Kolbens (11a2, 11b2, 11c2) gleitend innerhalb des Zylinders (11a1, 11b1, 11c1) montiert ist sowie beim Verschieben oder Verdrängen einstückig mit der Presskomponente (2a) ist, oder deren jeweiliger Kolben (11a2, 11b2, 11c2) ein Ende aufweist, das fest oder einstückig oder nicht beweglich in Bezug auf die Hauptpresskonstruktion (24) ist und der Zylinder (11a1, 11b1, 11c1), in dem der besagte Kolben (11a2, 11b2, 11c2) gleitend montiert ist, einstückig beim Verschieben oder Verdrängen mit der besagten Presskomponente (2a) ist.

4. Presse nach Anspruch 1 oder 2 oder 3, umfassend einen Druckmultiplikator, wobei der besagte mindestens eine Förderkreislauf (6) in den besagten Druckmultiplikator mündet, wobei der besagte Druckmultiplikator in Fluidverbindung mit einem Aktuator oder System mit mindestens einem hydraulischen, öldynamischen oder pneumatischen Zylinder und Kolben der hydraulischen oder öldynamischen oder pneumatischen Presse steht.

5. Presse nach irgendeinem der vorangegangenen Ansprüche, worin
in dem besagten mindestens einen ersten Betriebszustand die besagte mindestens eine Pumpe (5) oder ein Kompressor mit einer ersten Förderdurchflussrate der besagten Flüssigkeit oder des besagten Gases arbeitet, während in dem besagten mindestens einen zweiten Betriebszustand die besagte mindestens eine Pumpe (5) oder der Kompressor mit einer zweiten Förderdurchflussrate, die kleiner als die besagte erste Durchflussrate ist, oder einer zweiten Förderdurchflussrate, die gleich Null ist, arbeitet und/oder
in dem besagten mindestens einen ersten Betriebszustand der besagte Ablass oder die besagte Umgehung geschlossen oder teilweise geschlossen ist, während in dem besagten mindestens einen zweiten Betriebszustand der besagte Ablass oder die besagte Umgehung in Bezug auf den besagten mindestens einen ersten Betriebszustand offen oder nicht geschlossen ist.

6. Presse nach irgendeinem der vorangegangenen Ansprüche, worin die besagte Pumpe eine Pumpe (5) mit variabler Durchflussrate ist, während die Schaltkomponente (8a) so angeordnet ist, dass sie die Durchflussrate der Pumpe variiert.

7. Presse nach irgendeinem der vorangegangenen Ansprüche, worin die besagte Hauptwelle (4) oder die besagte mindestens eine Hilfswelle (7a) auf der dem besagten mindestens einen Motor (3) gegenüberliegenden Seite und mittels einer geeigneten zweiten Welle oder eines Stifts (5d) oder einer Rotationskomponente mit der Pumpe (5) oder dem Kompressor drehfest verbunden ist, so dass die Rotation des Schwungrads (7) eine Rotation einer jeweiligen zweiten Welle (5d) oder Rotationskomponente der Pumpe (5) oder des Kompressors bestimmt.

8. Presse nach irgendeinem der vorangegangenen Ansprüche, worin die besagte mindestens eine Antriebsgruppe (1) mindestens eine Haube oder Rahmenkomponente (20, 21) zum freitragenden Stützen des besagten mindestens einen Motors (3) und/oder der besagten mindestens einen Pumpe (5) oder des Kompressors enthält, wobei die Haube oder Rahmenkomponente (20, 21) von einer jeweiligen vertikalen Wand (18) freitragend gestützt wird.

9. Presse nach Anspruch 8, worin:
eine Haube oder Rahmenkomponente (20) für den Motor ein erstes Ringelement (20a) enthält, das an einem oberen Abschnitt (18c) einer Wand (18) befestigt ist, ein zweites ringförmiges Element (20b), das mit einem Flansch (20d) endet, der an einem jeweiligen geflanschten Teil (3a) des Motors (3) befestigt ist,
eine Haube oder Rahmenkomponente (21) zum Stützen der Pumpe (5) enthält stattdessen ein erstes Ringelement (21a), das an einem oberen Abschnitt (18c) einer Wand (18) befestigt ist, ein zweites ringförmiges Element (21b), das mit einem Flansch (21d) endet, der an einer jeweiligen Pumpe (5) befestigt ist.

10. Presse nach einem der vorhergehenden Ansprüche, umfassend einen ersten verzahnten Stift (10a) und einen zweiten verzahnten Stift (10b) und worin der besagte erste verzahnte Stift (10a) zur Verbindung zwischen der Hauptwelle (4) des Motors (3) und einer Hilfswelle (7a) des besagten mindestens einen Schwungrads (7) vorgesehen ist, und/oder der besagte zweite verzahnte Stift (10b) zur Verbindung zwischen der Hilfswelle (7a) des Schwungrads (7) und der zweiten Welle (5d) der Pumpe (5) vorgesehen ist.

11. Presse nach irgendeinem der vorangegangenen Ansprüche, umfassend mindestens eine Komponente zur Steuerung (8b) der besagten mindestens einen Schaltkomponente (8a), um sie zwischen dem besagten mindestens einen ersten Betriebszustand und dem besagten mindestens einen zweiten Betriebszustand umzuschalten.

12. Presse nach Anspruch 11, worin die besagte Steuerkomponente (8b) ein Konstantleistungsregler ist, der so beschaffen ist, dass er sicherstellt, dass die von der besagten mindestens einen Pumpe (5) oder dem Kompressor gelieferte Leistung immer die gleiche ist.

13. Presse nach irgendeinem der vorangegangenen Ansprüche, umfassend eine Vielzahl von Antriebseinheiten, worin die besagte elektronische Steuereinheit so angeordnet ist, dass sie den Betriebsmodus von mindestens einer ersten Antriebseinheit von Motor auf Generator umkehrt, während mindestens eine andere oder zweite Antriebseinheit in einem Motorbetriebsmodus gehalten wird, so dass es möglich ist, die besagte mindestens eine andere oder zweite Antriebseinheit mittels der von der besagten mindestens einen ersten Antriebseinheit erzeugten Energie zu steuern.

14. Verfahren zur Bearbeitung oder Behandlung von Teilen oder Gegenständen nach irgendeinem der vorangegangenen Ansprüche, umfassend die folgenden Schritte:
- des Versetzens der besagten mindestens einen Pumpe (5) oder des Kompressors in den mindestens einen zweiten Betriebszustand und des In-Rotation-Versetzens des besagten mindestens einen Motors (3), um das besagte mindestens eine Schwungrad (7) in Rotation zu versetzen, bis das besagte mindestens eine Schwungrad (7) auf eine bestimmte erste Anzahl von Umdrehungen pro Minute gebracht ist,
- wenn es notwendig ist, die Presskomponente (2a) zu bewegen, das Betätigen der Schaltkomponente (8a), um die Pumpe (5) oder den Kompressor und/oder den Auslass oder die Umgehung in den mindestens einen ersten Betriebszustand zu bringen, so dass die Betätigung der Pumpe (5) oder des Kompressors durch das besagte mindestens eine Schwungrad (7) einen Schub der Flüssigkeit oder des Gases in dem Förderkreislauf (6) bestimmt, bis oder damit die besagte Presskomponente (2a) betätigt wird, wobei in diesem Schritt das besagte mindestens eine Schwungrad (7) aufgrund der von der besagten mindestens einen Pumpe (5) oder dem Kompressor für die Verdrängung der Presskomponente (2a) absorbierten Leistung oder Energie verlangsamt wird,
- sobald die Verdrängung der besagten Presskomponente (2a) abgeschlossen ist, das erneute Steuern der besagten Schaltkomponente (8a), um die Pumpe (5) oder den Kompressor und/oder den Auslass oder die Umgehung in den mindestens einen zweiten Betriebszustand zu schalten, wobei es dem Motor (3) in dem mindestens einen zweiten Betriebszustand gelingt, die Umdrehungen pro Minute des Schwungrads (7) wieder zu erhöhen, so dass es auf die erste Anzahl von Umdrehungen zurückgebracht wird.

15. Verfahren nach Anspruch 14, worin, wenn die Bewegung der Presskomponente (2a) ausgeführt wurde und wenn der Pressschritt eines Werkstücks beendet ist, die Energie, die von dem besagten mindestens einen Schwungrad (7) verwendet wird, um die besagte Pumpe (5) oder den Kompressor anzutreiben und die Flüssigkeit oder das Gas ordnungsgemäß in dem besagten mindestens einen Kreislauf zum Fördern (6) zu schieben, bis oder damit die Presskomponente (2a) betätigt wird, eine Reduzierung der Umdrehungen des besagten mindestens einen Schwungrads (7) von etwa 1500 U/min auf etwa 1300 U/min bestimmt.

## Revendications

1. Presse hydraulique, oléodynamique ou pneumatique comprenant un composant de pressage (2a) et une base (2b) ou un composant supérieur définissant avec ledit composant de pressage (2a) une région ou une zone de pressage (PZ) où agencer des pièces ou des objets (OB) à traiter, ladite presse comprenant en outre au moins un groupe d'entraînement (1) agencé pour alimenter un liquide ou un gaz audit composant de pressage (2a) afin de le déplacer vers et loin de ladite base (2b) ou composant supérieur pour presser des objets (OB) dans la région ou zone de pressage (PZ), ledit groupe d'entraînement comprenant :
- au moins un moteur (3) agencé pour entraîner un arbre principal respectif (4) en rotation,
- au moins une pompe (5) ou un compresseur agencé pour aspirer et refouler un liquide ou un gaz pour le déplacement dudit composant de pressage (2a),
- au moins un circuit pour transporter (6) ledit liquide ou gaz en aspiration, traversant et refoulant à partir de ladite au moins une pompe (5) ou compresseur, ledit circuit de transport (6) étant agencé pour transporter convenablement le liquide ou le gaz pour pousser ou en tout cas bouger ou déplacer ledit composant de pressage (2a),
- au moins un composant de commutation (8a) pour la commutation entre au moins une première condition de fonctionnement et au moins une deuxième condition de fonctionnement de ladite au moins une pompe (5) ou compresseur et/ou un refoulement ou une dérivation dudit circuit de transport (6),
ledit groupe comprenant en outre au moins un volant d'inertie (7) interposé entre ledit au moins un moteur (3) et ladite au moins une pompe (5) ou compresseur, ledit au moins un volant d'inertie (7) étant relié cinématiquement
d'une part, audit au moins un arbre principal (4), de sorte que ledit au moins un volant d'inertie (7) soit entraîné en rotation par ce dernier, et
d'autre part, à ladite au moins une pompe (5) ou compresseur pour y transférer le mouvement de rotation conféré par ledit au moins un moteur (3), de sorte que
ladite au moins une pompe (5) ou ledit compresseur déplace ou pousse ledit liquide ou gaz dans le circuit de transport (6) et jusqu'à ou de manière à actionner un composant de pressage respectif (2a) suivant le mouvement qui lui est conféré par ledit au moins un volant d'inertie (7) uniquement dans l'au moins une première condition de fonctionnement ou dans une plus large mesure dans l'au moins une première condition de fonctionnement, alors que
dans ladite au moins une deuxième condition de fonctionnement ladite au moins une pompe (5) ou ledit compresseur ne se déplace pas ou ne pousse pas ledit liquide ou gaz dans le circuit de transport (6) jusqu'à ou de manière à actionner un composant de pressage respectif (2a) ou le déplace ou le pousse dans le circuit de transport (6) et jusqu'à ou de manière à actionner un composant de pressage respectif (2a) dans une mesure ou à un débit ou puissance inférieurs à l'au moins une première condition de fonctionnement,
ledit au moins un volant d'inertie (7) recevant l'énergie de rotation dudit au moins un moteur (3) au moins pendant l'au moins une deuxième condition de fonctionnement,
ladite presse comprenant en outre une unité de commande électronique,
dans lequel ledit au moins un arbre principal (4), ledit au moins un volant d'inertie (7) et une goupille ou deuxième arbre (5d) ou composant de rotation de ladite au moins une pompe (5) ou compresseur sont montés pour tourner autour du même axe (x-x),
dans lequel ledit au moins un volant d'inertie (7) est fixé ou claveté sur ou en une seule pièce avec l'arbre principal (4) ou sur ou en une seule pièce avec un arbre auxiliaire (7a) couplé de manière rigide ou intégrale en rotation avec ledit arbre principal (4), moyennant quoi en activant ledit au moins un moteur (3), ce dernier met en rotation ledit au moins un volant d'inertie (7),
dans lequel chaque extrémité (7c, 7d) dudit arbre auxiliaire (7a) ou dudit arbre principal (4) fait saillie d'un côté respectif du volant d'inertie (7) et dans lequel ledit groupe d'entraînement (1) est pourvu d'une unité de support principale (14) ayant une base (15) et des parois verticales (18) s'étendant depuis la base (15) et définissant une ouverture traversante ou une zone de berceau supérieure (18a), une extrémité respective (7c, 7d) ou une partie intermédiaire dudit arbre auxiliaire (7a) ou dudit arbre principal (4) étant montée et soutenue dans celui-ci ou sur celui-ci,
dans lequel ledit au moins un volant d'inertie (7) est en forme de disque ou d'anneau d'un diamètre compris entre 600 mm et 3 m environ,
**caractérisé en ce que**
ladite presse comprenant en outre un ou plusieurs composants de fermeture supérieurs (19), chacun pouvant être accouplé avec une paroi verticale respective (18) pour fermer par le dessus la zone de berceau (18a) et l'arbre auxiliaire (7a) ou l'arbre principal (4) disposé à l'intérieur, avec interposition de paliers spéciaux, telle structure à paroi verticale (18) définissant une zone de berceau (18a) et composant de fermeture (19) étant prévus à la fois sur le côté du moteur (3) et sur le côté de la pompe (5), de sorte que les deux extrémités (7c, 7d) de l'arbre auxiliaire (7a) ou deux parties de l'arbre principal (4), chacune dépassant d'un côté respectif du volant d'inertie (7), soient supportées par l'unité de support principale (14) au niveau des zones de berceau respectives (18a).

2. Presse selon la revendication 1, comprenant une structure de pressage principale (24) comportant des montants ou composants (25) pour supporter de manière coulissante ledit composant de pressage (2a), ladite presse comprenant en outre au moins un actionneur ou système (11a, 11b, 11c) avec au moins un cylindre hydraulique, oléodynamique ou pneumatique (11a1, 11b1, 11c1) et un piston (11a2, 11b2, 11c2), ledit actionneur ou système est monté et soutenu à l'intérieur de la structure de pressage principale (24), ledit au moins un circuit de transport (6) s'ouvrant directement dans au moins un cylindre dudit au moins un actionneur ou système (11a, 11b, 11c) avec au moins un cylindre (11a1, 11b1, 11c1) et piston.

3. Presse selon la revendication 2, dans laquelle ledit au moins un actionneur ou système (11a, 11b, 11c) avec au moins un cylindre (11a1, 11b1, 11c1) et un piston (11a2, 11b2, 11c2) a un cylindre respectif (11a1, 11b1, 11c1) fixe ou intégral ou non mobile par rapport à la structure de pressage principale (24) et à une extrémité d'un piston respectif (11a2, 11b2, 11c2) monté de manière coulissante à l'intérieur du cylindre (11a1, 11b1, 11c1) ainsi qu'intégrale en translation ou en déplacement avec le composant de pressage (2a) ou a le piston respectif (11a2, 11b2, 11c2) ayant une extrémité fixe ou intégrale ou non mobile par rapport à la structure de pressage principale (24) et au cylindre (11a1, 11b1, 11c1), dans laquelle ledit piston (11a2, 11b2, 11c2) est monté de manière coulissante, intégrale en translation ou en déplacement avec ledit composant de pressage (2a).

4. Presse selon la revendication 1 ou 2 ou 3, comprenant un multiplicateur de pression, ledit au moins un circuit de transport (6) s'ouvrant dans ledit multiplicateur de pression, ledit multiplicateur de pression étant en communication fluide avec un actionneur ou un système comportant au moins un cylindre hydraulique, oléodynamique ou pneumatique et un piston de la presse hydraulique ou oléodynamique ou pneumatique.

5. Presse selon l'une quelconque des revendications précédentes, dans laquelle
dans ladite au moins une première condition de fonctionnement, ladite au moins une pompe (5) ou un compresseur fonctionne à un premier débit de refoulement dudit liquide ou gaz, alors que dans ladite au moins une deuxième condition de fonctionnement, ladite au moins une pompe (5) ou compresseur fonctionne à un deuxième débit de refoulement inférieur audit premier débit ou à un deuxième débit égal à zéro, et/ou
dans ladite au moins une première condition de fonctionnement, ledit refoulement ou ladite dérivation est fermée ou partiellement fermée, tandis que dans ladite au moins une deuxième condition de fonctionnement, ledit refoulement ou ladite dérivation est ouverte ou non fermée par rapport à ladite au moins une première condition de fonctionnement.

6. Presse selon l'une quelconque des revendications précédentes, dans laquelle ladite pompe est une pompe à débit variable (5), tandis que ledit composant de commutation (8a) est agencé pour faire varier le débit de la pompe.

7. Presse selon l'une quelconque des revendications précédentes, dans laquelle ledit arbre principal (4) ou ledit au moins un arbre auxiliaire (7a) est intégré en rotation, du côté opposé par rapport audit au moins un moteur (3) et au moyen d'un deuxième arbre ou goupille (5d) ou composant de rotation approprié avec la pompe (5) ou compresseur, de sorte que la rotation du volant d'inertie (7) détermine une rotation d'un deuxième arbre respectif (5d) ou composant de rotation de la pompe (5) ou compresseur.

8. Presse selon l'une quelconque des revendications précédentes, dans laquelle ledit au moins un groupe d'entraînement (1) comprend au moins un composant de cloche ou de cadre (20, 21) pour supporter en porte-à-faux ledit au moins un moteur (3) et/ou ladite au moins une pompe (5) ou compresseur, ledit composant de cloche ou de cadre (20, 21) étant soutenu en porte-à-faux par une paroi verticale respective (18).

9. Presse selon la revendication 8, dans laquelle :
un composant de cloche ou de cadre (20) pour le moteur comprend un premier élément annulaire (20a) contraint à une section supérieure (18c) d'une paroi (18), un deuxième élément annulaire (20b) se terminant par une bride (20d) contrainte à une partie à bride respective (3a) du moteur (3),
un composant de cloche ou de cadre (21) pour supporter la pompe (5) comprend à la place un premier élément annulaire (21a) contraint à une section supérieure (18c) d'une paroi (18), un deuxième élément annulaire (21b) se terminant par une bride (21d) contrainte à une pompe respective (5) .

10. Presse selon l'une quelconque des revendications précédentes, comprenant une première goupille cannelée (10a) et une deuxième goupille cannelée (10b) et dans laquelle ladite première goupille cannelée (10a) de liaison est prévue entre l'arbre principal (4) du moteur (3) et un arbre auxiliaire (7a) dudit au moins un volant d'inertie (7), et/ou ladite deuxième goupille cannelée (10b) de liaison est prévue entre l'arbre auxiliaire (7a) du volant d'inertie (7) et le deuxième arbre (5d) de la pompe (5).

11. Presse selon l'une quelconque des revendications précédentes, comprenant au moins un composant pour commander (8b) ledit au moins un composant de commutation (8a) pour le commuter entre ladite au moins une première condition de fonctionnement et ladite au moins une deuxième condition de fonctionnement.

12. Presse selon la revendication 11, dans laquelle ledit composant de commande (8b) est un régulateur de puissance constante, tel qu'il garantit que la puissance délivrée par ladite au moins une pompe (5) ou compresseur est toujours la même.

13. Presse selon l'une quelconque des revendications précédentes, comprenant une pluralité d'unités d'entraînement, dans laquelle ladite unité de commande électronique est agencée pour inverser le mode de fonctionnement d'au moins une première unité d'entraînement du moteur au générateur, tandis qu'au moins une autre ou une deuxième unité d'entraînement est maintenue dans un mode de fonctionnement du moteur, de sorte qu'il est possible de commander ladite au moins une autre ou deuxième unité d'entraînement au moyen de l'énergie générée par ladite au moins une première unité d'entraînement.

14. Procédé d'usinage ou de traitement de pièces ou objets à l'aide d'une presse selon l'une quelconque des revendications précédentes, comprenant les étapes suivantes :
- placer ladite au moins une pompe (5) ou compresseur dans l'au moins une deuxième condition de fonctionnement et mettre en rotation ledit au moins un moteur (3) de manière à entraîner ledit au moins un volant d'inertie (7) en rotation jusqu'à amener ledit au moins un volant d'inertie (7) à un premier nombre donné de tours par minute,
- lorsqu'il est nécessaire de déplacer l'élément de pressage (2a), actionner l'élément de commutation (8a) de manière à amener la pompe (5) ou le compresseur et/ou le refoulement ou dérivation dans l'au moins une première condition de fonctionnement, de sorte que l'actionnement de la pompe (5) ou du compresseur par ledit au moins un volant d'inertie (7) détermine une poussée du liquide ou gaz dans le circuit de transport (6) jusqu'à ou de manière à actionner ledit composant de pressage (2a), dans cette étape ledit au moins un volant d'inertie (7) étant ralenti en raison de la puissance ou de l'énergie absorbée par ladite au moins une pompe (5) ou compresseur pour le déplacement du composant de pressage (2a),
- une fois le déplacement dudit composant de pressage (2a) est terminé, commander à nouveau ledit composant de commutation (8a) de manière à commuter la pompe (5) ou le compresseur et/ou le refoulement ou dérivation, dans l'au moins une deuxième condition de fonctionnement, dans l'au moins une deuxième condition de fonctionnement le moteur (3) réussissant à nouveau à augmenter le nombre de tours par minute du volant d'inertie (7) en le ramenant au premier nombre de tours.

15. Procédé selon la revendication 14, dans lequel lorsque le mouvement du composant de pressage (2a) a été effectué et lorsque l'étape de pressage d'une pièce est terminée, l'énergie utilisée par ledit au moins un volant d'inertie (7) pour entraîner ladite pompe (5) ou compresseur et pousser correctement le liquide ou gaz dans ledit au moins un circuit de transport (6) jusqu'à ou de manière à faire fonctionner le composant de pressage (2a) détermine une réduction du nombre de tours dudit au moins un volant d'inertie (7) d'environ 1 500 tours par minute à environ 1 300 tours par minute.
